**Europäisches Patentamt**

**European Patent Office**

**Office européen des brevets**

(19)

(11) Veröffentlichungsnummer: **0 458 796 B2**

(12)

# NEUE EUROPÄISCHE PATENTSCHRIFT

(45) Veröffentlichungstag der neue Patentschrift:
**17.05.95**

(51) Int. Cl.6: **B60R 21/32**

(21) Anmeldenummer: **90901757.6**

(22) Anmeldetag: **27.01.90**

(86) Internationale Anmeldenummer:
**PCT/DE90/00048**

(87) Internationale Veröffentlichungsnummer:
**WO 90/09298 (23.08.90 90/20)**

(54) **VERFAHREN ZUR AUSLÖSUNG VON RÜCKHALTEMITTELN.**

(30) Priorität: **18.02.89 DE 3905052**
**25.07.89 DE 3924507**

(43) Veröffentlichungstag der Anmeldung:
**04.12.91 Patentblatt 91/49**

(45) Bekanntmachung des Hinweises auf die
Patenterteilung:
**11.11.92 Patentblatt 92/46**

(45) Bekanntmachung des Hinweises auf die
Entsheidung über den Einspruch:
**17.05.95 Patentblatt 95/20**

(84) Benannte Vertragsstaaten:
**DE FR GB IT SE**

(56) Entgegenhaltungen:
**EP-A- 0 064 888     EP-A- 0 292 669**
**EP-A- 0 327 853     EP-A- 0 342 401**
**WO-A-88/00146     WO-A-88/07461**
**DE-A- 2 123 359     DE-A- 3 816 588**
**DE-C- 3 413 768     FR-A- 2 139 944**
**FR-A- 2 184 307     FR-A- 2 553 508**

(73) Patentinhaber: **ROBERT BOSCH GMBH**
**Postfach 30 02 20**

**D-70442 Stuttgart (DE)**

(72) Erfinder: **MATTES, Bernhard**
**Ouerstrasse 41**
**D-7123 Sachsenheim 1 (DE)**
Erfinder: **NITSCHKE, Werner**
**Rosseger Weg 14**
**D-7257 Ditzingen 1 (DE)**
Erfinder: **KUEHN, Willi**
**Gartenstrasse 32**
**D-7145 Markgröningen (DE)**
Erfinder: **DROBNY, Wolfgang**
**Flurweg 5**
**D-7122 Besigheim (DE)**
Erfinder: **WELLER, Hugo**
**Moerikestrasse 5**
**D-7141 Oberriexingen (DE)**
Erfinder: **TAUFER, Peter**
**Talstrasse 45**
**D-7253 Renningen 2 (DE)**
Erfinder: **JEENICKE, Edmund**
**Stuttgarter Strasse 102**
**D-7141 Schwieberdingen (DE)**
Erfinder: **REISCHLE, Klaus**
**Waldstrasse 13**
**D-7257 Ditzingen-Schoeckingen (DE)**

Erfinder: **HENNE, Michael**
**Schloss-Strasse 24**
**W-7257 Ditzingen-Schoeckingen (DE)**
Erfinder: **BURGER, Wilfried**
**Bahnhofstrasse 97**
**D-7254 Hemmingen (DE)**

## Beschreibung

### Stand der Technik

Die Erfindung geht aus von einem Verfahren zur Auslösung von Rückhaltemitteln nach dem Oberbegriff des Anspruchs 1. Solche Verfahren sind aus 1141 Ingénieurs de l'Automobile (1982) No. 6, S. 69-72, bekannt. Rückhaltesysteme mit lediglich einem, zentral angeordneten Aufprallsensor erfüllen ihre Aufgabe hervorragend bei einem Frontal- oder Heckaufprall. Probleme ergeben sich jedoch bei den im heutigen Stadtverkehr relativ häufig auftretenden Kollisionen mit schrägem Aufprallwinkel, da hier trotz einer akuten Gefahr für die Fahrzeuginsassen die Rückhaltemittel zu spät aktiviert werden. Um diesen Mängeln abzuhelfen und die Erkennung von in Schrägrichtung verlaufenden Kollisionen zu verbessern, sind weiterhin Rückhaltesysteme bekannt, z.B. (EP-A-0 292 669, DE-OS 22 40 389), die zwei Beschleunigungssensoren umfassen, deren Empfindlichkeitsachsen winklig zur Fahrzeuglängsachse angeordnet sind. Nachteilig ist hierbei der vergleichsweise hohe technische Aufwand zur Verkabelung der Sensoren, der kostensteigernd wirkt. Schließlich sind auch Rückhaltesysteme mit einer Mehrzahl von dezentral im Fahrzeug angeordneten Sensoren bekannt, die ebenfalls einen hohen Verkabelungsaufwand erfordern und zudem im praktischen Betrieb sehr störanfällig sind. Überdies sind bei allen bisher bekannten Systemen mit dezentraler Anordnung zusätzlicher Sensoren lediglich mechanische Schalter verwendet worden, deren Funktionsfähigkeit im praktischen Betrieb des Kraftfahrzeugs nicht ohne weiteres überprüfbar ist.

Aus FR-A-2 184 307 ist eine Sicherheitseinrichtung für Fahrzeuginsassen bekannt, die einen Beschleunigungssensor, einen Verstärker für das Ausgangssignal des Beschleunigungssensors, eine erste Schwellwertschaltung, eine Integrationsschaltung und eine zweite Schwellwertschaltung, sowie ein UND-Verknüpfungsglied umfaßt, dessen ersten Eingangsanschluß das Ausgangssignal des zweiten Schwellwertschalters zugeführt ist. Weiter umfaßt die Sicherheitseinrichtung eine dritte Schwellwertschaltung, der eingangsseitig das Ausgangssignal des Verstärkers zugeführt ist und deren Ausgangssignal wiederum am zweiten Eingangsanschluß des UND-Verknüpfungsgliedes liegt. Eine Änderung der Schwellwerte dervorerwähnten Schwellwertschalter ist nicht vorgesehen.

Aus WO-A-88/00146 ist weiter eine Vorrichtung zum Auslösen von Insassenschutzsystemen bekannt, die einen Beschleunigungsaufnehmer, einen Hochpass, einen Integrator, einen den Auslöseschwellwert für die Sicherungsmittel festlegenden ersten Schwellwertschalter und einen zweiten Schwellwertgeber umfaßt. Der Eingangsanschluß dieses zweiten Schwellwertgebers ist mit dem Ausgangsanschluß des Integrators verbunden, während der Ausgangsanschluß des zweiten Schwellwertgebers an einen am Eingangsanschluß des Integrators liegenden Summationspunkt geführt ist. Der zweite Schwellwertgeber erzeugt ein Ausgangssignal, das eine untere Integrationssschwelle des Integrators beeinflußt.

### Vorteile der Erfindung

Das erfindungsgemäße Verfahren mit den kennzeichnenden Merkmalen des Anspruchs 1 hat demgegenüber den Vorteil, daß bei einem Rückhaltesystem mit nur einem zentral angeordneten Sensor auch die Fahrzeuginsassen gefährdende Schräg-, Offset- und Polaufprallsituationen zuverlässig erkannt werden und die Rückhaltemittel rechtzeitig ausgelöst werden können. In den Unteransprüchen werden Weiterbildungen des Verfahrens angegeben.

### Zeichnung

Die Erfindung ist anhand von in der Zeichnung dargestellten Ausführungsbeispielen in der nachfolgenden Beschreibung näher erläutert Es zeigen Figur 1 in einem Diagramm die Geschwindigkeitsverminderung als Funktion der Zeit, Figur 2 in Gestalt einer schematischen Kennlinie den Integrationswert als Funktion des Beschleunigungswertes, Figur 3 bis Figur 8 Diagramme mit Darstellungen der Geschwindigkeitsänderung als Funktion der Zeit,Figur 9 in einem Diagramm die Abhängigkeit eines Schwellwertes von der Beschleunigung,Figur 10 bis Figur 13 Diagramme mit Darstellungen der Geschwindigkeitsänderung als Funktion der Zeit, Figur 14 bis Figur 16 Diagramme zur Darstellung der Beschleunigung als Funktion der Zeit, Figur 17 ein Beschleunigungs-Zeit-Diagramm beim Überfahren eines Eisenbahngleises und Figur 18 und Figur 19 Diagramme mit Darstellung der Geschwindigkeitsänderung als Funktion der Zeit.

### Beschreibung der Ausführungsbeispiele

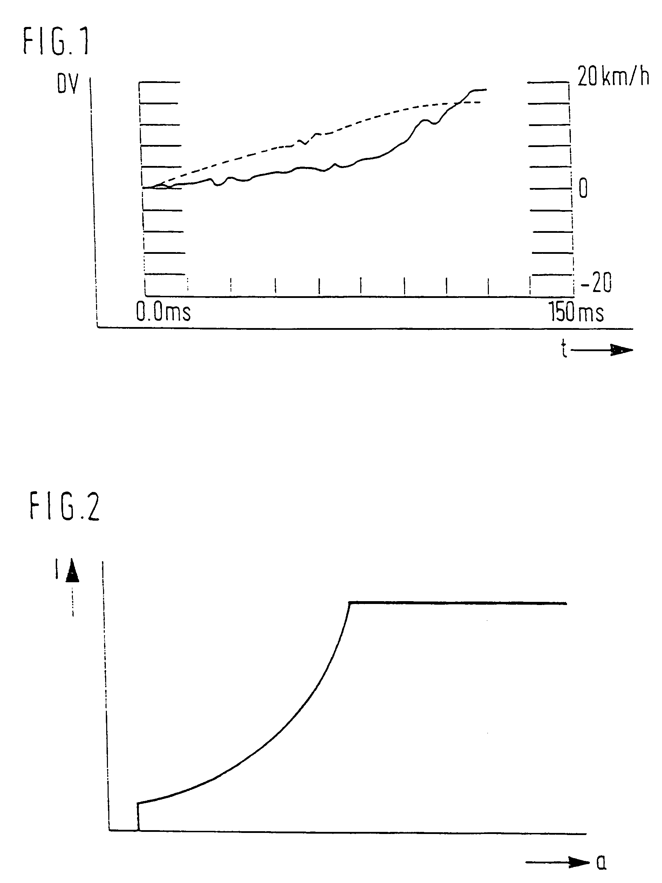

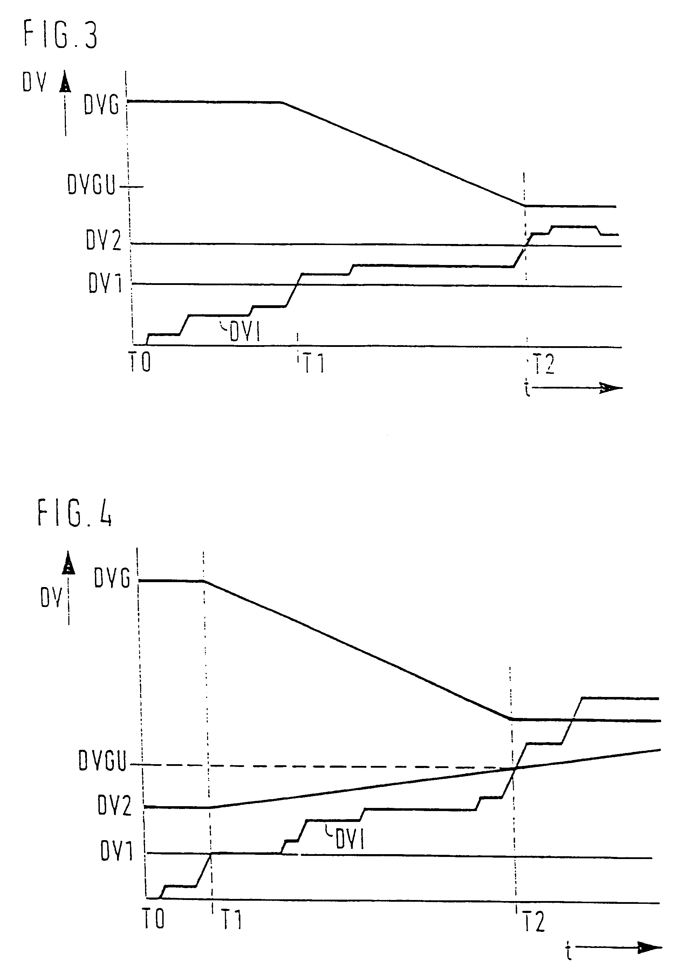

Figur 1 zeigt in einem Diagramm die Geschwindigkeitsverminderung DV eines Fahrzeugs als Funktion der Zeit, die beispielsweise bei einer Fahrzeugkollision anläßlich eines Verkehrsunfalls auftritt. Die Geschwindigkeitsänderung wird durch Integration der von einem Sensor, beispielsweise einem Beschleunigungsaufnehmer erfaßten Beschleunigung gewonnen. Die in dem Diagramm punktiert dargestellte Kurve entspricht einem Aufprall in Längsachsenrichtung des Fahrzeugs, die einer Geschwindigkeitsänderung von etwa 14,3 km pro Stunde in einem Zeitraum von 120 ms nach Beginn der Kollision entpricht. Diese Unfallsituation soll noch nicht zu einer Auslösung führen, da keine nennenswerte Gefahr für die Insassen besteht. Die ausgezogene Kurve dagegen, die bei einem Schrägaufprall mit Stoßwinkel von 30° in bezug auf die Fahrzeuglängsachse entsteht,entspricht einer Geschwindigkeitsänderung von ca. 26 km pro Stunde innerhalb einer Zeit von 120 ms nach Kollisionsbeginn und sollte unbedingt zu einem Auslösen des Rückhaltesystems führen. Nachteilig bei bekannten Systemen ist, daß gerade beiderartigen Kollisionen mit Schrägaufprall gefährliche Situationen von dem lediglich in Längsachsenrichtung des Fahrzeug empfindlichen Sensor zu spät erkannt werden, mit der Folge, daß eine Auslösung des Rückhaltesystems in der Regel zu spät erfolgt, so daß kein wirksamer Schutz mehr gewährleistet werden kann.

Eine Verbesserung des Auslöseverhaltens kann nun gemäß der Erfindung dadurch erreicht werden, daß eine in dem Rückhaltesystem vorgesehene Integrationseinrichtung für die Geschwindigkeitsänderung bzw. Beschleunigung (DV-Integrator) nicht die vom Beschleunigungssensor abgegebenen Beschleunigungswerte integriert, sondern Werte, die nach Art einer Kennlinie oder eines Kennlinienfeldes den Ausgangssignalen des Beschleunigungssensors zugeordnet sind. Ein Musterbeispiel einer solchen Zuordnung geht aus der Darstellung in Figur 2 hervor, die in Gestalt einer schematischen Kennlinie den Integrationswert als Funktion des Beschleunigungswertes a wiedergibt. Die Erfindung geht hierbei von der Erkenntnis aus, daß durch das in der Kennlinie erkennbare überproportionale Bewerten von größeren Beschleunigungswerten, z.B. durch eine quadratische Bewertung einer hohen Beschleunigung, entsprechende Ausgangswerte des Beschleunidungssensors viel stärker integriert werden als dies bei einer proportionalen Bewertung (entspricht einer linearen Kennlinie) der Fall wäre. Dadurch kann auch bei sehr schnell ablaufenden Crashsituationen durch die dabei auftretenden großen Beschleunigungsamplituden und entsprechend große Amplitudenwerte des Ausgangssignals des Beschleunigungssensors der DV-Integrator sehr schnell anwachsen. Ein notwendigerweise sehr schnelles Auslösen kann somit bei sehr schnellen Crashvorgängen rechtzeitig erfolgen. Auf langsame Crashvorgänge wird dabei durch entsprechende Gestaltung der Kennlinie kein Einfluß genommen. Somit kann die Auslöseempfindlichkeit von Rückhaltesystemen auf vergleichsweise einfache Art in schnellen Crashvorgängen und langsamen Crashvorgängen unterschiedlich eingestellt werden.

Bei bekannten Rückhaltesystemen werden die Rückhaltemittel aktiviert, wenn das aufintegrierte Ausgangssignal (Beschleunigungssignal) des Beschleunigungssensors eine vorgebbare feste Schwelle, die sogenannte DV-Schwelle, überschreitet. Diese aufintegrierte Beschleunigung stellt die Geschwindigkeitsänderung gerechnet vom Beginn der Aufprallsituation dar. Die Zeit, die dieses DV-Integral benötigt, um die DV-Schwelle zu erreichen, wurde bisher bei herkömmlichen Rückhaltesystemen nicht berücksichtigt.Die Erfindung zeigt nun Wege auf, wie durch Berücksichtigung auch dieses Zeitverhaltens Rückhaltesysteme für Fahrzeuginsassen noch wirksamer gestaltet werden können.

Eine erste Methode, die Zeit in das Auslösekriterium einzubeziehen, besteht darin, die DV-Schwelle als Funktion der Zeit darzustellen, wobei die Zeit ab einem gewissen minimalen DV-Integratorstand oder ab einem besonderen Merkmal der Beschleunigung oder deren erstem Integral läuft. Eine besondere Funktionsabhängigkeit des Auslösekriteriums von der Zeit könnte aus der Beobachtung des Quotienten Konstante/t gewonnen werden. In einem alternativen Ausführungsbeispiel kann die DV-Schwelle nicht nur in Abhängigkeit von der abgelaufenen Zeit, sondern auch in Abhängigkeit von dem kumulierten DV-Integratorstand, beispielsweise auch vom Quotienten DV-Integrator/t beeinflußt werden. Der Letztgenannten Quotient stellt die mittlere Geschwindigkeitsveränderung oder die Verzögerung dar.

In einer weiteren Alternative kann statt der vorstehend erwähnten DV-Schwelle das DV-Integral selbst in Abhängigkeit von der abgelaufenen Zeit vergrößert oder verkleinert werden, wobei die DV-Schwelle selbst in diesem Fall konstant bleibt.

Die vorstehend nur kurz angesprochenen Zusammenhänge werden im Folgenden wieder unter Bezugnahme auf die Zeichnungen näher erläutert. Befindet sich der DV-Integrator zwischen zwei Integratorwerten, also innerhalb eines Bereiches oder eines Bandes des DV-Integrator-Wertebereichs, so wird auf die DV-Schwelle Einfluß genommen. Der Bereich oder das Band des DV-Integrator-Wertebereichs kann in einem ersten Ausführungsbeispiel über die Zeit als konstant angesehen werden. Alternativ kann der Bereich als Funktion der Zeit t, der DV-Grundschwelle und/oder des DV-Integrators angesehen werden. Das bedeutet, daß beispielweise die Bandbreite über der Zeit konstant bleiben kann, ebenso wie es möglich ist, daß sich die Bandbreite über die Zeit etwa trompetenförmig aufweiten als auch einengen kann, ebenso wie es möglich ist, daß sowohl die untere Grenze als auch obere Grenze des Bereichs eine allgemeine Funktion über der Zeit der DV-Grundschwelle und des DV-Integrators sein können. Die vorstehend erwähnte Einflußnahme auf die DV-Schwelle innerhalb des soeben definierten Bereiches kann eine beliebige Funktion der Zeit, der DV-Grundschwelle und des DV-Integrators selbst sein. Ist beispielweise der DV-Integrator unterhalb des unteren Wertes, der den genannten Bereich begrenzt, so wird die DV-Schwelle auf den Wert einer ursprünglichen DV-Grundschwelle eingestellt. Ist dagegen der DV-Integrator oberhalb des oberen Wertes, der den genannten Bereich begrenzt, so bleibt die DV-Schwelle vorzugsweise auf dem Wert, der als letzter durch diese Maßnahme eingestellt wurde. Ein erstes Ausführungsbeispiel in diesem Zusammenhang wird nun anhand von Figur 3 erläutert. In diesem Ausführungsbeispiel hat der Bereich oder das Band des DV-Integrator-Wertebereichs eine konstante Breite, nämlich zwischen den Werten DV1 bis DV2, die von der Zeit bzw. von anderen Parametern unabhängig ist. Zum Zeitpunkt T0 ist eine relativ hohe DV-Schwelle, nämlich die DV-Grundschwelle DVG gesetzt. Der im Diagramm treppenförmig dargestellte DV-Integrator DVI läuft mit zunehmender Zeit t hoch und tritt zum Zeitpunkt T1 nach Überschreiten des unteren Schwellwertes DV1 in den Bereich oder das Band des DV-Integrators-Wertebereichs ein, in dem Einfluß auf die DV-Schwelle genommen werden soll. Befindet sich nun der DV-Integrator DVI innerhalb des durch die Schwellwerte DV1, DV2 begrenzten Wertebereichs, wird die DV-Schwelle DV ausgehend von der DV-Grundschwelle DVG als Funktion der Zeit bis zu einem vorgebbaren Minimalwert abgesenkt. In dem Ausführungsbeispiel nach Figur 3 erfolgt das Absenken der DV-Schwelle mit einem linearen Verlauf, der etwa durch die Beziehung

$$DV - Schwelle = DV - Grundschwelle\ (1 - p\ t)$$

charakterisiert werden kann. Gemaß Figur 3 wird die DV-Grundschwelle entsprechend der vorstehend erwähnten Beziehung solange linear abgesenkt, bis der DV-Integrator DVI den DV-Integrator-Wertebereich durch Überschreiten der oberen Schwelle DV2 wieder verlassen hat oder sich die DV-Schwelle auf einen Minimalwert einstellt. Die DV-Grundschwelle behält dann diesen zum Zeitpunkt T2 erreichten minimalen Wert DVGU bei. Sinn der zuvor erläuterten Maßnahme ist es, DV-Integrator-Verläufe, welche sich speziell bei Schrägaufprallsituationen (etwa (±10° - 30°) in bezug auf die Fahrzeuglängsachse) über eine relativ lange Zeit innerhalb einesvorgebaren Wertebereichs DV1, DV2 befinden, so auszuwerten, daß sich eine Verschärfung der Auslösebereitschaft durch das Absenken der DV-Schwelle vom relativ hohen Wert der DV-Grundschwelle DVG auf den niedrigeren Wert DVGU ergibt. Dabei stört es nicht, daß sich DV-Integrator-Verläufe ebenso bei vergleichsweise langsamen Frontalaufprallsituationen in dem zuvor definierte Bereich DV1,DV2 befinden, in denen bei derartigen Frontalaufprallsituationen keine Auslösung der Rückhaltemittel gewünscht ist. Bei den letztgenannten Crashsituationen treten typischerweise kleine und relativ kurze Beschleunigungsabläufe auf, die bei den hier aufgezeigten Maßnahmen nicht zu einer Auslösung der Rückhaltemittel führen. Somit kann hierdurch die Auslöseempfindlichkeit für langsame Frontalaufprallsituationen und langsame Schrägaufprallsituationen unterschiedlich eingestellt werden.

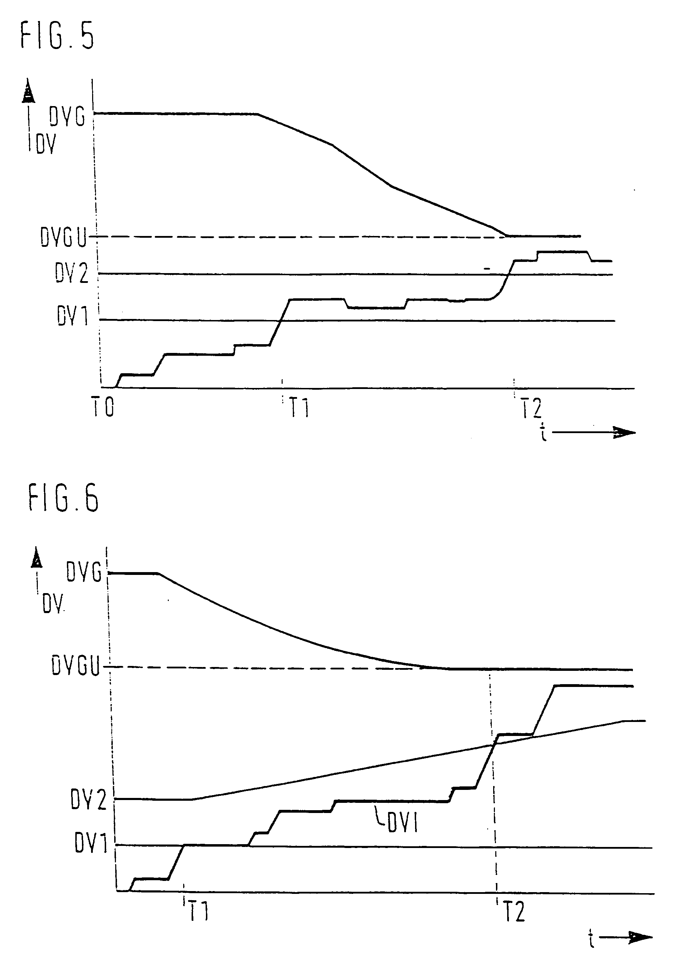

In einem weiteren Ausführungsbeispiel der Erfindung wird gemäß Figur 4 der DV-Integrator-Wertebereich DV1, DV2 nicht über der Zeit konstant gehalten, sondern mit zunehmender Zeit verbreitert. Diese Verbreiterung erfolgt gemäß dem in Figur 4 dargestellten Ausführungsbeispiel insbesondere dadurch, daß zum Zeitpunkt T1, an dem der DV-Integrator durch Überschreiten des unteren Schwellwertes DV1 in den DV-Integrator-Wertebereich eindringt, sich der obere Schwellwert DV2 des DV-Integrator-Wertebereichs vergrößert. In dem in Figur 4 dargestellten Ausführungbeispiel erfolgt diese Vergrößerung etwa nach einer linearen Funktion der Zeit t. Ebenso wie im Ausführungbeispiel gemäß Figur 3 wird, beginnend zum Zeitpunkt T1, an dem also der DV-Integrator durch Überschreiten der unteren Schwelle DV1 in den Bereich DV1, DV2 eindringt, die DV-Schwelle DV ausgehend von der DV-Grundschwelle DVG mit einem vorzugsweise linearen Verlauf bis zum Minimalwert DVGU abgesenkt. Dieser Minimalwert DVGU wird dann erreicht, wenn der DV-Integrator durch Überschreiten der oberen Schwelle DV2 den Wertebereich DV1, DV2 wieder verläßt (Zeitpunkt T2). Auch durch die zuvor erläuterte Maßnahme wird eine erhebliche Verschärfung der Ansprechempfindlichkeit der Rückhaltemittel erreicht, so daß auch bei schwierigen Schrägaufprallsituationen eine optimale Auslösung der Rückhaltemittel zum Schutz der Fahrzeuginsassen gewährleistet ist.

In dem weiteren Ausführungsbeispiel der Erfindung nach Figur 5 erreicht der DV-Integrator DVI den unteren Grenzwert DV1 des vorgebbaren DV-Integrator-Wertebereichs zum Zeitpunkt T1, wodurch ein Absenken der DV-Schwelle vom relativ hohen Wert der DV-Grundschwelle DVG veranlaßt wird. Allerdings ist DV-Grundschwelle nicht mehr ausschließlich von der Zeit t abhängig sondern zusätzlich vom jeweils aktuellen Stand des DV-Integrators DVI, wodurch sich eine weitere Verfeinerung des Ansprechverhaltens des Rückhaltesystems ergibt. Die DV-Schwelle wird wiederum bis zu einem vorgebbaren Minimalwert DVGU abgesenkt, der dann erreicht wird, wenn der DV-Integrator durch Überschreiten/der oberen Schwelle DV2 zum Zeitpunkt T2 den DV-Integrator-Wertebereich DV1, DV2 verläßt.

In einem weiteren Ausführungsbeispiel nach Figur 6 erweitert sich, ähnlich wie in dem Ausführungsbeispiel nach Figur 4 der DV-Integrator-Wertebereich DV1, DV2 mit zunehmender Zeit t, da sich der obere Schwellwert DV2 als Funktion der Zeit vergrößert. Die Zeitabhängigkeit des oberen Schwellwertes DV2 beginnt zum Zeitpunkt T1, an dem der DV-Integrator-DVI den unteren Schwellwert DV1 überschreitet. Ebenfalls zu diesem Zeitpunktwird wiederum der DV-Schwellwert ausgehend von der relativ hohen DV-Grundschwelle DVG abgesenkt, wobei sich diese Absenkung näherungsweise durch folgenden Ausdruck darstellen läßt

DV - Schwelle = (DV - Integrater/t Konst 1) + Konst 2

Zum Zeitpunkt T2, an dem der DV-Integrator DVI den vorgegebenen DV-Integrator-Wertebereich DV1, DV2 verlassen hat, nimmt die DV-Schwelle ihren geringsten Wert, also DVGU, an. Unterschreitet der Integrator DVI den DV-Integrator-Wertebereich DV1, DV2, so nimmt die DV-Schwelle wieder den Wert der DV-Grundschwelle DVG an.

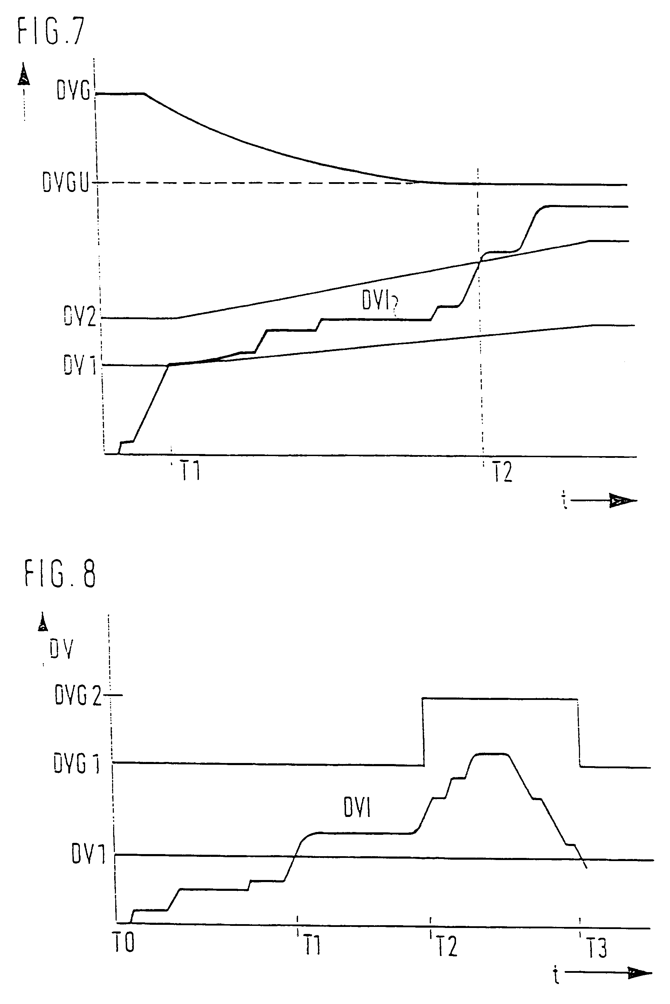

Das Ausführungsbeispiel der Erfindung gemäß Figur 7 unterscheidet sich von den zuvor beschriebenen Ausführungsbeispielen dadurch, daß auch die untere Schwelle DV1 des DV-Integrator-Bereichs DV1, DV2, ebenso wie die obere Schwelle DV2 ab dem Zeitpunkt T1 eine Zeitabhängigkeit zeigt. So kann beispielsweise die untere Schwelle DV1 ab dem Zeitpunkt T1 dargestellt werden als

DV1 (t) = n t + K2,

während die oberen Schwelle DV2 sich als

DV2(t) = mt + K1

darstellen läßt. Beide Grenzen DV1, DV2 des DV-Integrator-Wertebereichs DV1, DV2 zeigen also eine lineare Zeitabhängigkeit, da ihr Verlauf durch die vorstehend wiedergegebenen Geradengleichungen darstellbar ist. In den vorgenannten Gleichungen sind mit m, n die Steigungen der Geraden bezeichnet, während die Ausdrücke K1, K2 Konstanten darstellen. Wie in dem anhand von Figur 6 beschriebenen Ausführungsbeispiel wird, beginnend mit dem Zeitpunkt T1, d.h. beginnend mit dem Eintritt des DV-Integrators DVI in den vorgegebenen Wertebereich DV1, DV2, die DV-Schwelle ausgehend von der DV-Grundschwelle DVG bis zu einem vorgebbaren Minimalwert DVGU abgesenkt. Auch dieses Ausführungsbeispiel ermöglicht es, die Auslöseempfindlichkeit an die besonderen Probleme des Schrägaufpralls anzupassen, so daß sich ein optimaler Schutz für die Fahrzeuginsassen erreichen läßt.

In dem weiteren Ausführungbeispiel nach Figur 8 überschreitet der DV-Integrator DVI zum Zeitpunkt T1 den Schwellwert DV1, unterschreitet diesen aber während eines längeren Zeitraums nicht mehr. Wenn jedoch anderseits festgestellt wird, daß der DV-Integrator DVI die für das Auslösen der Rückhaltemittel gesetzte Schwelle DVG1 innerhalb einervorgegebenen Zeit nach Überschreiten des DV1-Schwellwertes nicht erreicht, wird zum Zeitpunkt T2 die DV-Grundschwelle DVG1 auf eine weniger empfindliche DV-Grundschwelle DVG2 angehoben. Die wirksame Zeit dieser Anhebung kann sowohl von einem Zeitglied als auch vom Überschreiten bzw. Unterschreiten von DV-Schwellen (z. B. DV1) in Zusammenwirkung mit Zeiten bestimmt werden. Dies kommt einer Verminderung der Auslösebereitschaft gleich. Dieses Zeitglied bewirkt, daß die verminderte Auslösebereitschaft über einen vorgebbaren Zeitraum etwa vom Zeitpunkt T2 bis zum Zeitpunkt T3 aufrechterhalten und erst zum Zeitpunkt T3 die Empfindlichkeit wieder auf den geringeren Schwellwert DVG1 abgesenkt wird. Das Wiederanheben der Empfindlichkeit auf den Schwellwert DVG1 kann unmittelbar nach Ablauf des Zeitgliedes zum Zeitpunkt T3 erfolgen; alternativ kann die Rückkehr zu der empfindlicheren Schwelle DVG1 gegebenenfalls auch mit einer bestimmten Zeitabhängigkeit, beispielsweise mit einem linearen Verlauf als Funktion der Zeit, erfolgen. Das Zeitglied kann beispielsweise durch einen Zähler realisiert werden, der zum Zeitpunkt T2 gestartet und bei Erreichen eines der gewünschten Zeitverzögerung entsprechenden Zählerstandes, also beispielweise zum Zeitpunkt T3, gestoppt wird. Sinn dieser Maßnahme entsprechend dem vorstehend erläuterten Ausführungbeispiel ist es, DV-Integrater-Verläufe, weiche sich über eine relativ lange Zeit auf einem niedrigen Niveau, jedoch oberhalb eines ersten DV-Schwellwertes, hier DV1, befinden, so zu interpretieren, daß zwar eine kontinuierliche Verzögerung anliegt, diese jedoch zu gering ist, um die Rückhaltesysteme anzusteuern. Angestrebt wird also eine weniger empfindliche Reaktion der Rückhaltemittel. Beispielsweise ist das Verfahren gemäß Ausführungsbeispiel zu Figur 8 dann zweckmäßig einsetzbar, wenn eine Bremsung auf einer Schlechtwegstrecke durchgeführt wird. Dabei kann es vorkommen, daß sich der DV-Integrator langsam hochschaukelt, ohne daß jedoch eine die Insassen gefährdende Situation vorliegt. Ebenso wirkt sich dieses Verfahren positiv aus bei langsamen Crashvorgängen, bei welchen zwar eine Auslösung der Rückhaltemittel stattfinden würde, jedoch die Aktivierung der Rückhaltemittel zu spät käme, um noch zum Schutz der Fahrzeuginsassen beitragen zu können. Bei einer zu späten Auslösung ist nämlich eine für den sinnvollen Einsatz von Rückhaltemitteln maximal zulässig Vorverlagerung der Fahrzeuginsassen bereits überschrtiten. Beispielsweise wäre eine Aktivierung des Airbags nicht mehr sinnvoll, wenn ein Körperteil eines Fahrzeuginsassen bereits auf das Lenkrad des Fahrzeug aufgeschlagen ist. Durch das Anheben der DV-Schwelle auf einen weniger empfindlichen Wert DVG2 kann somit eine nicht mehr sinnvolle Auslösung von Rückhaltemitteln verhindert werden, um dadurch eine zusätzliche Gefährdung der Fahrzeuginsassen durch die Rückhaltemittel selbst zu vermeiden.

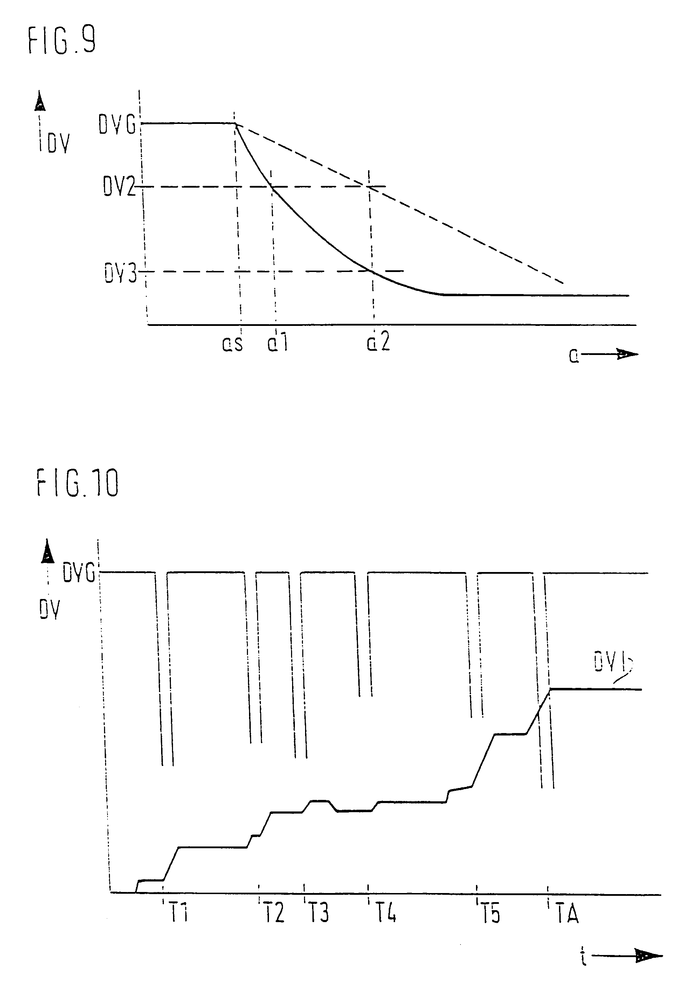

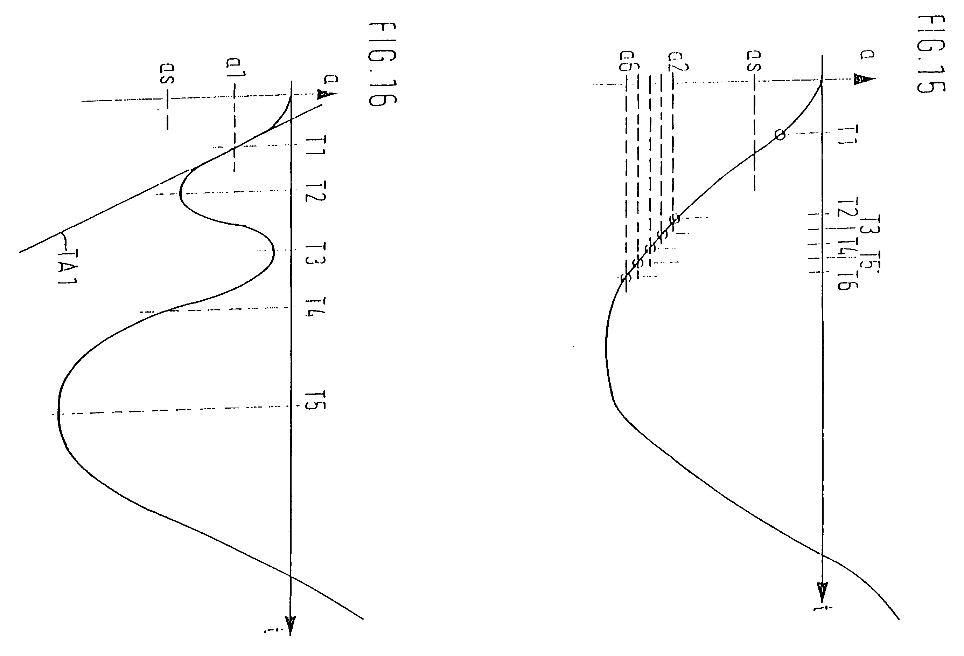

Eine weitere vorteilhafte Ausgestaltung der Erfindung wird anhand von Figur 9 erläutert. Eine weitere Verbesserung des Auslöseverhaltens der Rückhaltemittel wird dadurch erreicht, daß die DV-Schwelle schon von den vom Beschleunigungssensor erfaßten Beschleunigungswerten abhängig gemacht wird. Dies kann beispielsweise dadurch erreicht werden, daß jedem vom Beschleunigungssensor erfaßten Bechleunigungswert über eine wählbare Kennlinie ein bestimmter DV-Schwellwert zugewiesen wird. Die DV-Schwellwerte lassen sich demzufolge also als Funktion der Bechleunigung a darstellen. Zur Erläuterung dieses Sachverhalts zeigt Figur 9 die Darstellung der DV-Schwellen-Kurve als Funktion der Beschleunigung a. Weiter wird zur Erläuterung auch auf Figur 14 verwiesen, die die Beschleunigung a als Funktion der Zeit t darstellt und damit praktisch das Ausgangssignal des Bechleunigungssensors wiedergibt.

In dem Beispiel gemäß Figur 9 wird die Auslöseschwelle bis zu einer Beschleunigung as, welche nach Figur 14 zum Zeitpunkt T1 erreicht wird, auf einem konstanten Wert gehalten und für größere Beschleunigungen abgesenkt.

Im Ausführungsbeispiel nach Figur 9 sind dazu zwei Alternativen dargestellt. Die gestrichelte Linie stellt eine Gerade dar, repräsentiert also eine lineare Absenkung des DV-Schwellwerts als Funktion der Beschleunigung. Gemäß Figur 14 wird zum Zeitpunkt T2 ein Beschleunigungswert a2 ermittelt. Gemäß der in Figur 9 dargestellten linearen Kurve wird diesem Beschleunigungswert a2 ein DV-Schwellwert DV2 zugeordnet. Als weitere Alternative kann der DV-Schwellwert in einer nichtlinearen Beziehung vom Beschleunigungswert a abhängig gemacht werden. Das wird anhand der in Figur 9 dargestellten ausgezogenen Kurve bildhaft erläutert. Ein abgesenkter DV-Schwellwert DV2 wird hier bereits bei einer relativ niedrigen Verzögerung a1 erreicht. Bei dem Beschleunigungswert a2 liegt eine bereits sehr stark abgesenkte DV-Schwelle DV3 vor.

Durch die vorbeschriebene Maßnahme wird bei großen Beschleunigungswerten a sehr viel leichter die für die Auslösung der Rückhaltemittel notwendige Überschreitung der DV-Schwelle möglich, als bei entsprechend kleineren Blescleunigungswerten. Ein notwendigerweise sehr schnelles Auslösen kann somit bei sehr schnellen Crashverläufen noch rechtzeitig erfolgen. Auf langsame Crashvorgänge wird bei entsprechender Auswahl der Kennlinie kein Einfluß genommen, da die Amplituden der Beschleunigungswerte vergleichsweise klein bleiben und nicht zu einer Absenkung der DV-Schwelle führen. Mit dieser Maßnahme kann somit die Auslöseempfindlichkeit an schnelle Crashverläufe besser angepaßt werden. Weiter kann eine unterschiedliche Auslöseempfindlichkeit für schnelle und langsame Crashsituationen gewählt werden. In Figur 14 ist die Beschleunigungs-Zeit-Kurve idealisiert dargestellt. In der Praxis sind dieser idealisierten Kurve zahlreiche Amplitudenschwankungen überlagert, die beispielsweise beim Durchfahren von Schlaglöchern entstehen. Wenn nun, wie zuvor beschrieben, die Amplitudenwerte der Beschleunigungs-Zeit-Kurve gemäß Figur 14 abgetastet und die abgetasteten Amplitudenwerte als Entscheidungskriterium für die Absenkung der DV-Schwelle entsprechend Figur 9 herangezogen werden, kann es vorkommen, daß gerade ein Extremwert der Amplitude bei einer temporären Schwankung der Beschleunigungs-Zeit-Kurve erfaßt wird. Da diese unter Umständen stark von einem Mittelwert abweicht, könnte es zu einer nicht sinnvollen Absenkung der DV-Schwelle gemäß den in Figur 9 dargestellten Kennlinien kommen. Um dieses zu verhindern, werden gemäß einer vorteilhaften Weiterbildung der Erfindung mehrere, zeitlich aufeinanderfolgende Amplitudenwerte der Beschleunigungs-Zeit-Kurve erfaßt, um einen Mittelwert zu bilden. Erst anhand dieses Mittelwertes wird geprüft, ob eine Absenkung der DV-Schwelle entsprechend den in Figur 9 beispielhaft dargestellten Kennlinienverläufen erforderlich ist. Diese Maßnahme wird anhand von Figur 15 erläutert, in der eine Beschleunigungs-Zeit-Kurve mit einem ähnlichen Verlauf wie in Figur 14 dargestellt ist. Zum Zeitpunkt T1 liegt ein relativ niedriger Beschleunigungswert vor, der noch nicht zu einer Absenkung der DV-Schwelle führt. Zu einem späteren Zeitpunkt wird eine Beschleunigungsschwelle as überschritten, die zu einer Absenkung des DV-Schwellwertes Anlaß geben muß. In aufeinanderfolgenden Zeitpunkten T2 bis T6 werden Amplitudenwerte der Beschleunigung-Zeit-Kurve erfaßt, die alle oberhalb des Beschleunigungswertes as liegen. Ein Amplitudenmittelwert wird dadurch gebildet,daß die erfaßten Amplitudenwerte addiert werden und die so erhaltene Summe der Amplitudenwerte durch die Anzahl der Meßwerte dividiert wird. Wie bereits erwähnt, wird der auf diese Weise erhaltene Amplitudenmittelwert daraufhin überprüft, ob eine Absenkung der DV-Schwelle entsprechend den in Figur 9 dargestellten Kennlinien erfolgen muß.

Gemäß einer weiteren vorteilhaften Ausgestaltung dieses Ausführungsbeispiels der Erfindung wird anstelle eines Amplitudenwertes oder eines Amplitudenmittelwertes der Beschleunigungs-Zeit-Kurve die Steigung der Beschleunigungs-Zeit-Kurve als Kriterium für das Absenken des DV-Schwellwertes herangezogen. Diese Maßnahme wird unter bezug auf Figur 16 erläutert. Die ebenfalls eine charakteristische Beschleunigungs-Zeit-Kurve eines bestimmten Fahrzeugtyps darstellt. Diese Kurve zeichnet sich durch ein erstes relatives Minimum zum Zeitpunkt T2 aus, dessen Amplitudenwert allerdings den Beschleunigungsgrenzwert as noch nicht überschreitet. Auf dieses relative Minimum zum Zeitpunkt T2 folgt dann wieder ein relatives Maximum zum Zeitpunkt T3, bei dem ein vergleichsweise niedriger Beschleunigungswert vorliegt. Im Anschluß an dieses relative Maximum bei T3 senkt sich die BeschleunigungsZeit-Kurve weiter ab, um erst zum Zeitpunkt T4 den Beschleunigungsgrenzwert as zu erreichen. Eine derartige Beschleunigungs-Zeit-Kurve ist charakteristisch für Fahrzeuge mit energieabsorbierenden Knautschzonen. Wenn, wie bei dem zuvor erwähnten Ausführungsbeispiel, als Kriterium für das Absenken der DV-Schwelle lediglich Amplitudenwerte herangezogen würden, käme man bei einem derartigen Kurvenverlauf zu völlig unbefriedigenden Ergebnissen. Ein Absenken der DV-Schwelle würde nämlich frühestens erst zum Zeitpunkt T4 veranlaßt, da erst dann die erfaßte Beschleunigungsamplitude den vorgegebenen Grenzwert as übersteigt. Bis zu diesem Zeitpunkt T4 würde dagegen gemäß Figur 9 die DV-Schwelle auf einem relativ hohen Wert DVG gehalten werden. In nachteiliger Weise würden hier durchaus gefährliche Crashsituationen nicht rechtzeitig erfaßt, da der Crashverlauf durch die Einflüsse der Knautschzone verdeckt wird. Die notwendige Absenkung der DV-Schwelle für ein empfindlicheres Reagieren der Rückhaltemittel käme zum Zeitpunkt T4 viel zu spät. Diesem Nachteil kann dadurch abgeholfen werden, daß als Auslösekriterium für das Absenken der DV-Schwelle die Steigung der Beschleunigungs-Zeit-Kurve erfaßt wird. Beispiels weise wird gemäß Figur 16 die Steigung der Beschleunigungs-Zeit-Kurve bei den Koordinaten T1, a1 erfaßt, was durch die eingezeichnete Tangente TA1 angedeutet ist. Obwohl der Beschleunigungswert a1 noch derart gering ist, daß bei reiner Amplitudenauswertung noch kein Anlaß für das Absenken der DV-Schwelle bestünde, zeigt doch die Steigung der Tangente TA1, daß es sich um eine gefährliche Crashsituation handelt, die ein schnelles Reagieren der Rückhaltemittel erforderlich macht. Dieses schnelle Reagieren der Rückhaltemittel wird, wie bereits beschrieben, durch Absenken der DV-Schwelle gemäß der Darstellung von Figur 9 erreicht. Die Steigung der Beschleunigungs-Zeit-Kurve kann auf einfache Weise dadurch ermittelt werden, daß in zwei kurz aufeinanderfolgenden Zeitpunkten die Amplitudenwerte erfaßt werden und der entsprechende Differenzenquotient gebildet wird. Übersteigt die diesem Differenzquotient entsprechende Steigung einen vorgebbaren Grenzwert, dann wird die DV-Schwelle nach einer vorgebbaren Beziehung, beispielsweise mit einer linearen Zeitabhängigkeit, abgesenkt.

Zuletzt wurden anhand einiger ausführlicher Ausführungsbeispiele Entscheidungskriterien für das Absenken der DV-Schwelle erläutert. Weitere Entscheidungskriterien können aus einer Frequenzanalyse der Beschleunigungs-Zeit-Kurve abgeleitet werden. Bei dieser Frequenzanalyse ist es dann auch möglich, Eigenresonanzen des Beschleunigungsaufnehmersystems zu erkennen und diese zu unterdrücken. Es ist weiter ebenfalls möglich, Störschwingungen mit zum Teil sehr hohen Amplitudenwerten, die allerdings nicht von einer Crashsituation stammen, wie z. B. Schlagbeanspruchungen des Fahrzeugs durch Steinschlag oder bei Durchfahren eines Schlaglochs, zu erkennen und von einer Bewertung auszunehmen. Weiter kann auch eine Mustererkennung durchgeführt werden, indem die Beschleunigungs-Zeit-Kurve sehrgenau erfaßt und beispielweise mit einem abgespeicherten Idealmuster verglichen wird. Des weiteren sind auch Kombinationen der zuvor beschriebenen Maßnahmen möglich, um im Einzelfall eine besonders optimale Anpassung der Bewertungskriterien an ein bestimmtes Fahrzeug zu erreichen.

In weiterer Ausgestaltung der Erfindung können für die Entscheidung, ob die DV-Schwelle abzusenken ist oder nicht, zusätzlich auch noch Ausgangssignale weiterer Sensoren herangezogen werden, die im Fahrzeug örtlich getrennt von der zentralen Sensoreinheit angeordnet sind. Auf diese Weise kann das Bewertungskriterium noch von bestimmten Betriebszuständen des Fahrzeug abhängig gemacht werden, die der zentrale Beschleunigungssensor allein nicht erfassen kann. Beispielsweise können Schaltsignale eines Hinterachsschalters, der Gurtschlösser, des Sitzkontakts, des Bremsschalters, eines Getriebeschalters, eines Berührungsschalters oder mechanischen Beschleunigungsschalters erfaßt und mit dem Ausgangssignal des zentralen Beschleunigungssensors kombiniert werden, um ein für das spezielle Fahrzeug besonders geeignetes Entscheidungskriterium für das Absenken der DV-Schwelle abzuleiten. Schließlich können auch Ausgangssignale weiterer im Fahrzeug vorhandener Steuergeräte für die Bremsregelung, für die Brennkraftmaschinensteuerung oder für die Navigation mit ausgewertet werden.

In den oben beschriebenen Ausführungsbeispielen wurde die DV-Schwelle nach Maßgabe eines DV-Integrator-Wertes oder eines Beschleunigungswertes, vorzugsweise auch über eine vorgebbare Kennlinie, beeinflußt. Es ist ebenfalls möglich, die erfaßten Grundwerte, wie DV-Integratorwerte und/oder den Beschleunigungswert, additiv und/oder multiplikativ zu beeinflussen, um eine bestimmte funktionale Abhängigkeit zur Einwirkung auf den Verlauf des DV-Schwellwertes zu erreichen. Sofern mehrere Parameter, beispielsweise auch noch Sensorausgangssignale von anderen Sensoren, berücksichtigt werden sollen, bietet es sich an, die DV-Schwellwertänderung nach Maßgabe von Kennwerten vorzunehmen, die in einem Kennfeld abgespeichert sind.

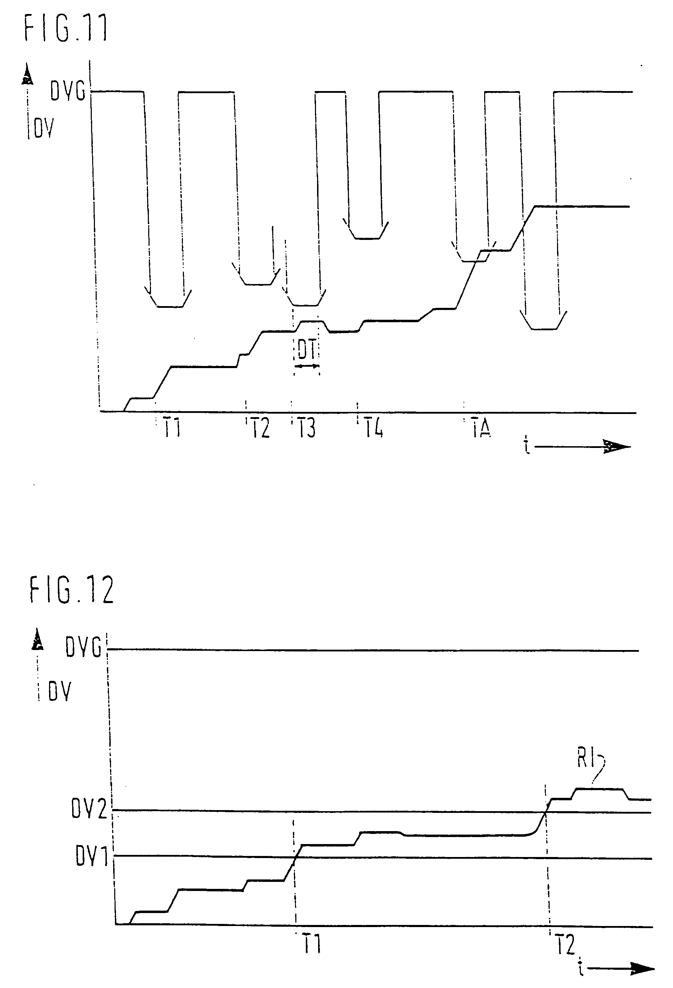

Bei den bisher beschriebenen Ausführungsbeispielen wurde die DV-Schwell bei Vorliegen eines Entscheidungskriteriums, ausgehend von einem relativ hohen Wert der DV-Grundschwelle DVG, abgesenkt, um eine empfindlichere Reaktion der Rückhaltemittel zu erreichen und den Schutz der Fahrzeuginssasen zu verbessern. Nach Wegfall des Entscheidungskriteriums, dessen Vorhandensein zweckmäßig taktweise nach einem vorgebbaren Zeittakt überprüft wird, wurde die zunächst abgesenkte DV-Schwelle praktisch ohne zeitliche Verzögerung wieder auf den ursprünglichen Grundwert DVG angehoben. Diese Situation wird nochmals unter Bezugnahme auf Figur 10 dargestellt. Die Abbildung zeigt die Geschwindigkeitsänderung DV als Funktion der Zeit t. In dem Diagramm ist weiter der Verlauf der Kurve des DV-Integrators DVI eingetragen. Schließlich ist auch der Wert der DV-Grundschwelle DVG eingezeichnet. Zu Zeitpunkten T1, T2, T3, T4, T5 und TA liegen Kriterien vor, die ein Absenken der DV-Grundschwelle vom relativ hohen Wert DVG auf einen vergleichsweise niedrigen Wertzweckmäßig erscheinen lassen, um die Ansprechempfindlichkeit des Rückhaltesystems zu vergrößern. Sofern bei der nächsten Überprüfung dieses Entscheidungskriterium nicht mehr vorliegt, wird die DV-Schwelle, praktisch verzugslos, wieder auf den vergleichsweise hohen Wert DVG angehoben. Dies ist zu den dargestellten Zeitpunkten T1, T2, T3, T4 und T5 der Fall. Erst zum Zeitpunkt TA überschreitet der DV-Integrator DVI den abgesenkten Schwellwert, wodurch eine Auslösung der Rückhaltemittel veranlaßt wird. Eine Verbesserung des Auslöseverhaltens wird gemäß einer weiteren Ausgestaltung der Erfindung dadurch erreicht, daß nach einer Verschärfung der Auslöseempfindlichkeit des Rückhaltesystems durch Absenken der DV-Schwelle von dem vergleichsweise hohen Schwellwert DVG auf einen niedrigeren Schwellwert diese Absenkung zwar möglichst unmittelbar erfolgt, jedoch das Entschärfen aufgrund von entsprechend neu erfaßten Beschleunigungswerten, zeitverzögert durchgeführtwird. Entschärfen bedeutet hier das Anheben einer zunächst abgesenkten DV-Schwelle auf beispielsweise den höheren Wert DVG der DV-Grundschwelle. Diese Maßnahme wird unter Bezug auf Figur 11 erläutert, die im wesentlichen der Darstellung von Figur 10 entspricht. Die Absenkung der DV-Schwelle vom hohen Wert der DV-Grundschwelle DVG findet wiederum zu Zeitpunkten T1, T2, T3, T4, TA statt. Abweichend zur Darstellung gemäß Figur 10 wird die DV-Schwelle erst mit einer Zeitverzögerung DT wieder auf den ursprünglichen Wert DVG der DV-Grundschwelle angehoben. Beim Integrieren der auftretenden Beschleunigungswerte hat nämlich der DV-Integrator eine Phasenverschiebung gegenüber den Beschleunigungsamplituden. Diese Verschiebung kann durch die vorstehend beschriebene Zeitverzögerung der Schwellenanhebung ausgeglichen werden. Durch die zeitverzögerte Rücknahme der abgesenkten Schwellwerte auf den Grundwert DVG auf günstige, Weise eine frühere Auslösung der Rückhaltemittel bzw. eine Auslösung mit einer größeren Auslösesicherheit stattfinden.

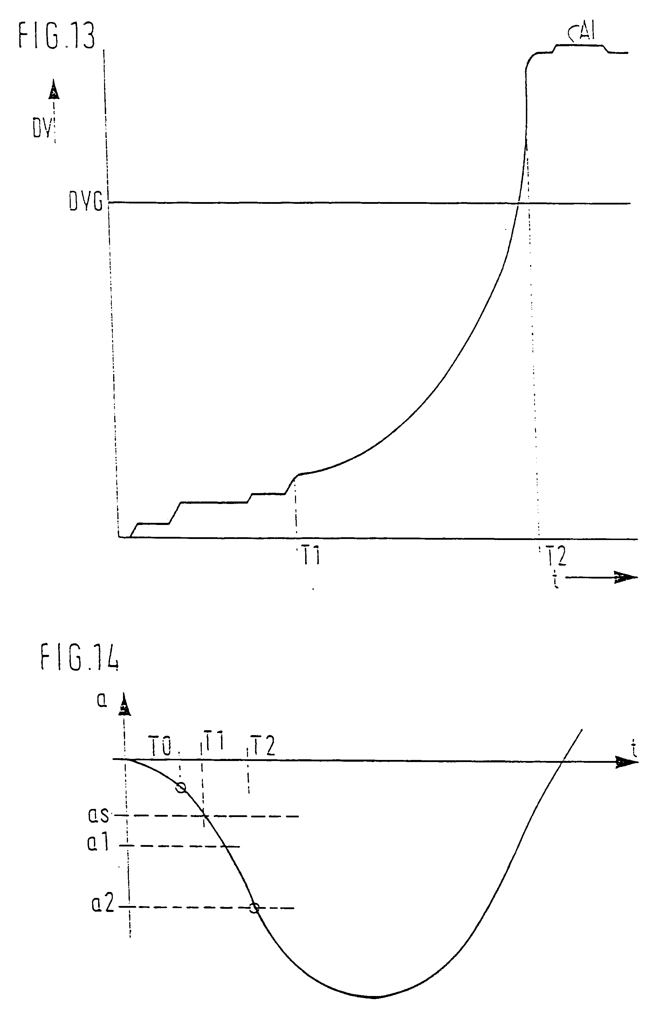

Eine vorteilhafte weitere Ausgestaltung der Erfindung erreicht eine Verbesserung des Auslöserverhaltens dadurch, daß in Abhängigkeit von einem DV-Referenzintegrator und der Zeit Integrationswerte beeinflußt werden. Die Integrationswerte werden nur dann beeinflußt, wenn sich der DV-Referenzintegrator innerhalb eines definierten Bereiches befindet. Läuft der DV-Referenzintegrator in den erwähnten Bereich, so wird ein Zeitglied gestartet. Die eingelesenen Beschleunigungswerte werden sodann mit einem Faktor, der zu der Zeitzählung proportional ist, multipliziert oder es wird ein Wert addiert. Die dadurch entstehenden neuen Integrationswerte werden durch den Auslöseintegrator integriert, der bei Überschreiten einervorgegebenen DV-Schwelle die Rückhaltemittel auslöst. Diese Maßnahmen werden anhand von Figur 12 und Figur 13 erläutert. Figur 12 zeigt ein Diagramm mit Darstellung der Geschwindigkeitsänderung DV als Funktion der Zeit, in dem zuzätzlich der Verlauf eines Referenzintegrators RI eingetragen ist. Weiter sind die DV-Grundschwelle DVG und ein durch niedrigere DV-Schwellen DV1 und DV2 abgegrenzter Bereich eingetragen. Figur 13 zeigt die gleiche funktionelle Abhängigkeit zwischen der Geschwindigkeitsänderung und der Zeit wie Figur 12, jedoch mit Darstellung des Kurvenverlaufs des Auslöseintegrators AI. Zum Zeitpunkt T1 tritt in Figur 12 der Referenzintegrator RI durch Überschreiten der niedrigen DV-Schwelle DV1 in den von den beiden Schwellen DV1 und DV2 begrenzten DV-Integrator-Wertebereich ein. Zu diesem Zeitpunkt T1 wird sodann ein Zeitglied gestartet, mit der Maßgabe, daß vom Beschleunigungssensor als Ausganssignal gelieferte Beschleunigungswerte, die vom Auslöseintegrator AI aufintegriert werden sollen, zuvor mit einem der abgelaufenen Zeit entsprechenden Faktor, vorzugsweise multiplikativ bzw. additiv, verknüpft werden. Diese Beeinflussung der vom Auslöseintegrator AI aufzuintegrierenden Beschleunigungswerte dauert solange an, bis der Referenzintegrator RI zum Zeitpunkt T2 durch Überschreiten der oberen Schwelle DV2 gemäß Figur 12 den durch die Schwellwerte DV1, DV2 definierten Bereich wieder verläßt. Etwa zu diesem Zeitpunkt ist aber auch der Befehl zum Auslosen der Rückhaltemittel gegeben worden, da, wie aus Figur 13 ersichtlich, der Auslöseintegrator AI den vorgegebenen Schwellwert DVG der DV-Schwelle überschritten hat. Durch diese Maßnahme wird bei Crashsituationen, bei denen der Referenzintegrator RI sich sehr lange in einem vorgebbaren Wertebereich befindet, der Auslöseintegrator AI sehr schnell anwachsen. Da sich ein solches Verhalten typischerweise bei Schrägaufprallsituationen mit Winkeln von etwa 30° in bezug auf die Fahrzeuglängsachse sowie bei Aufprallsituationen wie Offset-Crashs, Pol-Crashs usw. zeigt, ist dadurch ein sehr starkes Anwachsen des Auslöseintegrators AI möglich. Dadurch wird die Auslöseschwelle DVG bereits sehr schnell erreicht und die Rückhaltemittel können in einer Gefahrbringenden Situation sehr frühzeitig aktiviert werden. Die Referenzintegratorverläufe RI befinden sich bei Schrägaufprallsituationen und bei einer Frontalaufprallsituation unterschiedlich lange in dem durch die Grenzwerte DV1 und DV2 definierten Bereich. Mit der vorbeschriebenen Maßnahme kann somit die Auslöseempfindlichkeit für frontale Crashsituationen gegenüber Schräg-, Offset-, Pol-Crashsituationen unterschiedlich eingestellt werden.

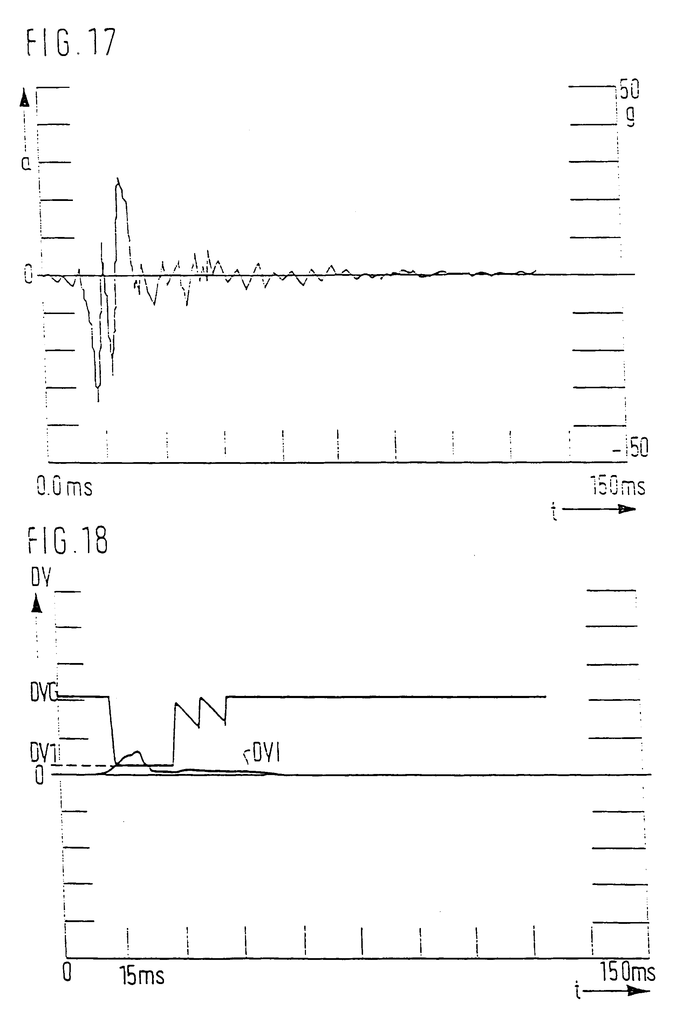

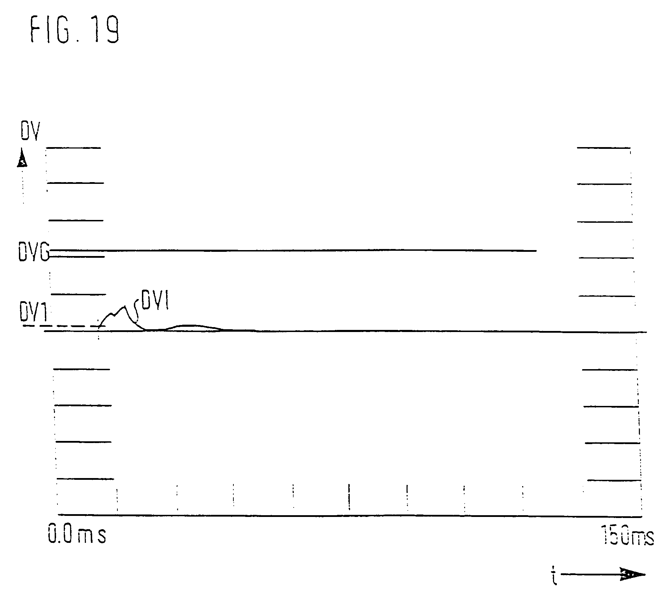

In einer weiteren vorteilhaften Ausgestaltung der Erfindung werden Zeitgliedergestartet, wenn der Referenzintegrator RI eine vorgebbare untere Schwelle, etwa die Schwelle DV1 in Figur 12, überschreitet. Diese Zeitglieder bewirken während ihrer Laufzeit, eine Art Modulation der DV-Schwelle dahingehend, daß entweder, je nach Art des angestrebten Auslöseverhaltens, die Grundschwelle angehoben oder abgesenkt wird. Weiterhin kann eine Absenkung der DV-Schwelle in Abhängigkeit von den erfaßten Beschleunigungsamplituden entsprechend einem schon oben beschriebenen Ausführungsbeispiel oder aber auch zusätzlich noch von der Polarität der Beschleunigungssignale durchgeführt werden. Jedes der Zeitglieder bewirkt für die Dauer seiner Laufzeit eine Beeinflussung der Absenkung der DV-Schwelle, auf die ihm zugeordnet individuelle Weise. Die Anzahl der einsetzbaren Zeitglieder ist beliebig wählbar, je nach Erfordernis der Art der DV Schwellenbeeinflussung. Als Zeitglieder lassen sich vorzugsweise Zählerschaltungen einsetzen. Anstelle mehrerer getrennter Zählschaltungen kann auch ein einziger Zähler vorgesehen werden, der auf unterschiedliche Zählerstände abgefragt wird. Eine zeitliche Begrenzung für die verschiedenen Arten der Beeinflussung der DV-Schwellen wird dann durch die Zählerstände gegeben. Eine Rücksetzung der Zähler oder des Zählers kann z.B. erfolgen, sobald der Referenzintegrator RI die schon erwähnte vorbeschriebene untere Schwelle DV1 wieder unterschritten hat. Mit den zuvor erwähnten Maßnahmen ist es auf besonders zweckmäßige Art und Weise möglich, Störimpulse relativ hoher Amplitude, die aber nicht von Crashsituationen herrühren, zu unterdrücken. Störimpulse dieser Art treten z.B. bei Hammerschlägen gegen die Karosserie, bei Steinschlag gegen den Fahrzeugunterboden, beim Aufschlagen der Karosserie auf Schienen beim Überfahren von Bahngleisen, auf. Eine unzweckmäßige Auslösung von Rückhaltemitteln bei derartigen impulsartigen Beanspruchungen wird sicher vermieden, ohne die Empfindlichkeit des Systems gegenüber den kritischen Schrägaufprallsituationen zu vermindern. Charakteristisch für Beschleunigungssignale, die von harten Schlagbeanspruchungen der zuvor beschriebenen Art herrühren, ist, daß sie mit sehr hohen Amplitudenwerten beginnen, daß diese jedoch schnell wieder auf vergleichsweise geringe Werte fallen. Deshalb kann das von einem Zeitglied beeinflußte Nichtabsenken der DV-Schwelle Fehlauslösungen bei den zuvor erwähnten Beanspruchungen verhindern. Dies gilt selbst für höchste, in der Praxis vorkommende Amplitudenwerte des Ausgangssignals des Bescheunigungssensors. Die zuletzt beschriebenen Maßnahmen werden im Folgenden anhand von Figur 17 bis 19 noch etwas ausführlicher beschrieben. Figur 17 zeigt das Ausganssignal eines Beschleunigungssensors beim Überfahren eines Eisenbahngleises, bei dem das Fahrzeug einer kurzzeitigen Schlagbeanspruchung ausgesetzt ist. Dargestellt ist die Beschleunigungs-Zeit-Kurve. Die Kurve zeigt ein bipolares Signal mit anfänglich sehr hohen Amplitudenwerten bis etwa über 30 g, die allerdings sehr rasch wieder abklingen. Schon nach etwa 30 ms liegen nur noch vergleichsweise niedrige Amplitudenwerte vor. Figur 18 zeigt wiederum eine Darstellung Geschwindigkeitsänderung DV als Funktion der Zeit t. Eingezeichnet in diesem Diagramm ist der Verlauf des DV-Integrators DVI zusammen mit der DV-Schwelle, die hier allerdings nach den oben beschriebenen Methoden veränderbar ist und nach einer komplexen Zeitfunktion verläuft. Die DV-Schwelle beginnt zum Zeitpunkt 0 mit einem relativ hohen konstanten Wert nämlich der DV-Grundschwelle DVG, der zur Empfindlichkeitssteigerung des Systems nach etwa 15 ms auf einen niedrigeren Wert abgesenkt ist, um auf diesem niedrigen Niveau, etwa DV1 für ca. 15 ms zu verharren und dann erneut, zumindest zeitweilig auf das Niveau der DV-Grundschwelle DVG wieder anzusteigen. Die Darstellung nach Figur 18 zeigt, daß der Kurvenverlauf des DV-Integrators DVI die abgesenkte DV-Schwelle nach etwa 13,5 ms übersteigt. Dies hätte die hier allerdings überflüssige Auslösung der Rückhaltemittel zur Folge.

Aus der Darstellung in Figur 19 geht nun hervor, daß keine Auslösung der Rückhaltesysteme stattfindet, da die DV-Schwelle nicht von der DV-Grundschwelle DVG auf den niedrigeren Wert DV1 hinabgesetzt worden ist. Dies wird durch eine Zählerschaltung bewirkt, die bei Beginn der Stoßbeanspruchung also zum Zeitpunkt 0 gesetzt wird und während einer vorgebbaren Mindestzeit, im Beispielsfall etwa 25 ms, läuft Wahrend dieser Zählerlaufzeit erreicht zwar der DV-Integrator DVI mit seinem Kurvenverlauf Amplitudenwerte, die das Niveau des reduzierten DV-Schwellwertes DV1 nach Figur 18 überschreiten würden. Da aber die DV-Schwelle nicht auf diesen Wert DV1 herabgesetzt worden ist, findet keine Auslösung des Rückhaltesystems statt Erst nach der durch die Zählerschaltung bestimmten Zeitverzögerung in der Größenordnung von etwa 25 ms könnte wieder eine Absenkung der DV-Schwelle zur Steigerung der Systemempfindlichkeit stattfinden.

**Patentansprüche**

1.  Verfahren zur Auslösung von Rückhaltemitteln bei einem Sicherungssystem für Fahrzeuginsassen, bei dem ein Beschleunigungssignal gemessen, dieses Beschleunigungssignal durch zeitliche Integration in eine Geschwindigkeit umgewandelt wird, und bei dem zur Bildung eines Auslösekriteriums mindestens ein Schwellwert für die Geschwindigkeit vorgebbar ist, dadurch gekennzeichnet, daß der als Auslösekriterum benutzte Schwellwert in Abhängigkeit von einer oder mehreren vom Crashvorgang abgeleiteten Zustandsgrößen des Fahrzeugs veränderbar ist.

2.  Verfahren zur Auslösung von Rückhaltemitteln bei einem Sicherungssystem für Fahrzeuginsassen, bei dem ein Beschleunigungssignal gemessen, dieses Beschleunigungssignal durch eine Wichtungsfunktion gewichtet, das gewichtete Beschleunigungssignal durch zeitliche Integration in ein Arbeitssignal umgewandelt wird und bei dem zur Bildung eines Auslösekriteriums mindestens ein Schwellwert für das Arbeitssignal vorgebbar ist, dadurch gekennzeichnet, daß der als Auslösekriterium benutzte Schwellwert in Abhängigkeit von einer oder mehreren vom Crashvorgang abgeleiteten Zustandsgrößen des Fahrzeugs veränderbar ist.

3.  Verfahren zur Auslösung von Rückhaltemitteln bei einem Sicherungssystem für Fahrzeuginsassen, bei dem ein Beschleunigungssignal gemessen, durch zeitliche Integration eine Geschwindigkeit gebildet, diese Geschwindigkeit durch Wichtung in ein Arbeitssignal umgewandelt wird, und bei dem zur Bildung eines Auslösekriteriums mindestens ein Schwellwert für das Arbeitssignal vorgebbar ist, dadurch gekennzeichnet, daß der als Auslösekriterium benutzte Schwellwert in Abhängigkeit von einer oder mehreren vom Crashvorgang abgeleiteten Zustandsgrößen des Fahrzeugs veränderbar ist.

4.  Verfahren zur Auslösung von Rückhaltemitteln bei einem Sicherungssystem für Fahrzeuginsassen, bei dem ein Beschleunigungssignal gemessen, dieses Beschleunigungssignal durch eine erste Wichtungsfunktion gewichtet, das gewichtete Beschleunigungssignal durch zeitliche Integration in ein erstes Arbeitssignal umgewandelt, dieses erste Arbeitssignal durch eine zweite Wichtungsfunktion in ein zweites Arbeitssignal umgewandelt wird, und bei dem zur Bildung eines Auslösekriteriums mindestens ein Schwellwert für das Arbeitssignal vorgebbar ist, dadurch gekennzeichnet, daß der als Auslösekriterium benutzte Schwellwert in Abhängigkeit von einer oder mehreren vom Crashvorgang abgeleiteten Zustandsgrößen des Fahrzeugs veränderbar sind.

5.  Verfahren nach einem der Ansprüche 1 bis 3, dadurch gekennzeichnet, daß als Zustandsgröße das Beschleunigungssignal selbst oder daraus abgeleitete Signale (z. B. die Fahrzeuggeschwindigkeit) benutzt werden.

6.  Verfahren nach einem der Ansprüche 1 bis 3, dadurch gekennzeichnet, daß als eine der Zustandsgrößen die im Crash ablaufende Zeit benutzt wird.

7.  Verfahren nach einem der Ansprüche 1 bis 5, dadurch gekennzeichnet, daß die seit Überschreitung von Schwellwerten durch eine oder mehrere Zustandsgrößen abgelaufenen Zeiten zur Bildung eines Auslösekriteriums Verwendung finden.

8.  Verfahren nach einem der Ansprüche 1 bis 5, dadurch gekennzeichnet, daß nicht nur eine oder mehrere augenblickliche Zustandsgrößen des Fahrzeugs, sondern auch zeitlich zurückliegende vom Crashvorgang abgeleitete Zustandsgrößen des Fahrzeugs zur Bildung eines Auslösekriteriums Verwendung finden.

9. Verfahren nach einem der Ansprüche 1 bis 8, dadurch gekennzeichnet, daß als eine oder mehrere Zustandsgrößen die Ausgangssignale eines oder mehrerer Sensoren verwendet werden.

10. Verfahren nach einem der Ansprüche 1 bis 9, dadurch gekennzeichnet, daß bei einem ein definiertes Schaltverhalten aufweisenden Sensor der Schwellwert oder die Wichtungsfunktionen in Abhängigkeit von dem Schaltzustand dieses Sensors veränderbar sind.

11. Verfahren nach einem der Ansprüche 1 bis 10, dadurch gekennzeichnet, daß ein erster Schwellwert für die Beschleunigung vorgegeben wird, daß mittels eines Sensors ein Amplitudenwert der Beschleunigungs-Zeit-Kurve erfaßt wird, und daß ein als Auslösekriterium benutzter zweiter Schwellwert dann verändert wird, wenn der Amplitudenwert der Beschleunigungs-Zeit-Kurve den ersten Schwellwert überschreitet.

12. Verfahren nach einem der Ansprüche 1 bis 11, dadurch gekennzeichnet, daß ein erster Schwellwert (as) der Beschleunigung (a) vorgegeben wird, daß in zeitlichem Abstand mehrere Amplitudenwerte (ai) der Beschleunigungs-Zeit-Kurve (a = a (t)) erfaßt werden, daß aus den mehreren Amplitudenwerten (ai) der arithmetische Mittelwert (ai) gebildet wird, und daß der als Auslösekriterium benutzte zweite Schwellwert (DV-Schwelle) - abhängig vom Mittelwert (ai) der letzten Beschleunigungswerte - verändert wird.

13. Verfahren nach einem der Ansprüche 1 bis 12, dadurch gekennzeichnet, daß zur Bildung des Mittelwertes (ai) mindestens fünf Amplitudenwerte (ai) erfaßt werden.

14. Verfahren nach einem der Ansprüche 1 bis 13, dadurch gekennzeichnet, daß ein erster Schwellwert (as) der Beschleunigung (a) und eine Beschleunigungswerten (ai) zugeordnete Kennlinie (f (ai)) vorgegeben werden, daß mindestens ein Amplitudenwert (ai) der Beschleunigungs-Zeit-Kurve (a = a (t)) erfaßt wird und daß ein als Auslösekriterium benutzter zweiter Schwellwert dann verändert wird, wenn der dem Amplitudenwert (ai) zugeordnete Wert der Kennlinie (f (ai)) den ersten Schwellwert (as) überschreitet.

15. Verfahren nach einem der Ansprüche 1 bis 14, dadurch gekennzeichnet, daß der als Auslösekriterium benutzte zweite Schwellenwert (DV-Schwelle) erniedrigt wird.

16. Verfahren nach einem der Ansprüche 1 bis 15, dadurch gekennzeichnet, daß die DV-Schwelle nach einer zeitabhängigen Funktion erhöht oder erniedrigt wird.

17. Verfahren nach einem der Ansprüche 1 bis 16, dadurch gekennzeichnet, daß die DV-Schwelle nach einer vom Integratorstand abhängigen Funktion erhöht oder erniedrigt wird.

18. Verfahren nach einem der Ansprüche 1 bis 17, dadurch gekennzeichnet, daß die DV-Schwelle sowohl nach einer zeitabhängigen Funktion als auch von einer DV-Integratorstand abhängigen Funktion erhöht oder erniedrigt wird.

19. Verfahren nach einem der Ansprüche 1 bis 18, dadurch gekennzeichnet, daß neben dem üblichen Integrator (Referenzintegrator) ein zusätzlicher Integrator (Auslöseintegrator) vorgesehen ist, der sich sowohl nach einer zeitabhängigen Funktion als auch nach einer referenzintegratorstandabhängigen Funktion vom Referenzintegrator unterscheidet und daß als Auslösekriterium der Vergleich zwischen der DV-Schwelle und dem Wert des Auslöseintegrators herangezogen wird.

20. Verfahren nach einem der Ansprüche 1 bis 19, dadurch gekennzeichnet, daß alle Änderungen der DV-Schwelle ebenso dem Integrator (Referenzintegrator) überlagert werden und daß der durch diese Maßnahme gebildete Auslöseintegrator dann zusammen mit der DV-Schwelle als Auslösekriterium dient.

21. Verfahren nach einem der Ansprüche 1 bis 20, dadurch gekennzeichnet, daß die DV-Schwelle nach einer linearen Funktion der Zeit abgesenkt oder angehoben wird.

22. Verfahren nach einem der Ansprüche 1 bis 21, dadurch gekennzeichnet, daß die DV-Schwelle nach einer nichtlinearen, insbesondere quadratischen Funktion der Zeit abgesenkt oder angehoben wird.

23. Verfahren nach einem der Ansprüche 1 bis 22, dadurch gekennzeichnet, daß die DV-Schwelle bei Feststellung des Absenkungskriteriums abgesenkt, nach Wegfall des Absenkungskriteriums jedoch zeitverzögert wieder angehoben wird.

24. Verfahren nach einem der Ansprüche 1 bis 23, dadurch gekennzeichnet, daß die Zeitverzögerung einige Millisekunden beträgt.

25. Verfahren nach einem der Ansprüche 1 bis 24, dadurch gekennzeichnet, daß die Steigung der Beschleunigungs-Zeit-Kurve (a = a (t)) erfaßt wird und daß die DV-Schwelle dann verändert, insbesondere erniedrigt wird, wenn die erfaßte Steigung der Beschleunigungs-Zeit-Kurve einen vorgebbaren Grenzwert überschreitet.

26. Verfahren nach einem der Ansprüche 1 bis 25, dadurch gekennzeichnet, daß ein Beschleunigungssignal erfaßt wird und daß vor der Ermittlung des Geschwindigkeitssignals durch zeitliche Integration des Beschleunigungssignals die Beschleunigungssignalwerte von einem Operator modifiziert werden.

27. Verfahren nach einem der Ansprüche 1 bis 26, dadurch gekennzeichnet, daß die Beschleunigungssignalwerte mit einer additiven Konstante verknüpft werden.

28. Verfahren nach einem der Ansprüche 1 bis 27, dadurch gekennzeichnet, daß die Beschleunigungssignalwerte mit einem multiplikativen Faktor verknüpft werden.

29. Verfahren nach einem der Ansprüche 1 bis 28, dadurch gekennzeichnet, daß den Beschleunigungssignalwerten Werte einer Kennlinie zugeordnet werden.

30. Verfahren nach einem der Ansprüche 1 bis 29, dadurch gekennzeichnet, daß den Beschleunigungssignalwerten Werte eines Kennfeldes zugeordnet werden.

31. Verfahren nach einem der Ansprüche 1 bis 30, dadurch gekennzeichnet, daß durch zeitliche Integration des Beschleunigungssignals bzw. einer Funktion des Beschleunigungssignals ein Geschwindigkeitssignal (DV) gebildet wird, daß ein Grundschwellwert (DV-Grundschwelle DVG) für das Geschwindigkeitssignal festgelegt wird, daß mindestens ein weiterer Schwellwert (DV1) für das Geschwindigkeitssignal festgelegt wird und daß der DV-Schwellwert dann verändert, insbesondere abgesenkt wird, wenn der DV-Integrator (DVI) den weiteren Schwellwert (DV1) des Geschwindigkeitssignals überschreitet.

32. Verfahren nach einem der Ansprüche 1 bis 31, dadurch gekennzeichnet, daß mindestens zwei Schwellwerte (DV1, DV2) des Geschwindigkeitssignals festgesetzt werden und daß der DV-Grundschwellwert (DVG) solange verändert, insbesondere erniedrigt wird, wie sich der DV-Integrator (DVI) innerhalb des durch die Schwellwerte (DV1, DV2) begrenzten Bereichs befindet, oder ein minimaler DV-Schwellwert erreicht wird.

33. Verfahren nach einem der Ansprüche 1 bis 32, dadurch gekennzeichnet, daß zumindest der höhere Schwellwert (DV2) der Schwellwerte (DV1, DV2) des Geschwindigkeitssignals zeitabhängig gewählt und zumindest ab dem Zeitpunkt (T1) zeitabhängig geändert wird, an dem der DV-Integrator (DVI) den Schwellwert (DV1) überschreitet.

34. Verfahren nach einem der Ansprüche 1 bis 33, dadurch gekennzeichnet, daß beide Schwellwerte (DV1, DV2) zeitabhängig veränderbar sind.

35. Verfahren nach einem der Ansprüche 1 bis 34, dadurch gekennzeichnet, daß die Schwellwerte (DV1, DV2) nach einer linearen Beziehung von der Zeit abhängig sind.

36. Verfahren nach einem der Ansprüche 1 bis 35, dadurch gekennzeichnet, daß die linear von der Zeit abhängigen Schwellwerte (DV1, DV2) unterschiedliche Steigungen aufweisen.

37. Verfahren nach einem der Ansprüche 1 bis 36, dadurch gekennzeichnet, daß bei Überschreiten einer vorgebbaren unteren Schwelle (DV1) durch den Referenzintegrator (RI) mindestens ein Zeitglied gestartet wird, das während seiner Laufzeit eine Änderung der DV-Schwelle (DVG) bewirkt.

38. Verfahren nach einem der Ansprüche 1 bis 37, dadurch gekennzeichnet, daß die DV-Schwelle (DVG) angehoben wird.

39. Verfahren nach einem der Ansprüche 1 bis 38, dadurch gekennzeichnet, daß die DV-Schwelle (DVG) abgesenkt wird.

40. Verfahren nach einem der Ansprüche 1 bis 39, dadurch gekennzeichnet, daß das Ausmaß der Änderung der DV-Schwelle (DVG) in Abhängigkeit von Beschleunigungsamplituden, von Beschleunigungsamplituden bestimmter Polarität oder in Abhängigkeit des Wertes eines Integratorstandes gewählt wird, um insbesondere Fehlauslösungen durch kurzzeitige Beschleunigungssignale hoher Amplitude (Schlag, Stoß) zu verhindern.

41. Verfahren nach einem der Ansprüche 1 bis 40, dadurch gekennzeichnet, daß das mindestens eine Zeitglied bei Unterschreiten der vorgebbaren unteren Schwelle (DV1) wieder zurückgesetzt wird.

42. Verfahren nach einem der Ansprüche 1 bis 41, dadurch gekennzeichnet, daß die DV-Schwelle (DVG) zur Erzielung eines gewünschten Auslöseverhaltens während der Laufzeiten des mindestens einen Zeitgliedes verändert wird.

43. Verfahren nach einem der Ansprüche 1 bis 42, dadurch gekennzeichnet, daß für jedes Zeitglied eine Zählerschaltung verwendet wird.

44. Verfahren nach einem der Ansprüche 1 bis 43, dadurch gekennzeichnet, daß zur Darstellung mehrerer Zeitglieder eine Zählerschaltung verwendet wird, die auf bestimmte Zählerstände abfragbar ist.

## Claims

1. Process for triggering restraining means in the case of a safety system for vehicle occupants, in which process an acceleration signal is measured, the said acceleration signal is converted by integration with respect to time into a speed, and in which process at least one threshold value can be predetermined for the speed in order to form a triggering criterion, characterized in that the threshold value used as the triggering criterion can be varied as a function of one or more state variables of the vehicle derived from the crash process.

2. Process for triggering restraining means in the case of a safety system for vehicle occupants, in which process an acceleration signal is measured, the said acceleration signal is weighted by a weighting function, the weighted acceleration signal is converted by integration with respect to time into an operational signal, and in which process at least one threshold value can be predetermined for the operational signal in order to form a triggering criterion, characterized in that the threshold value used as the triggering criterion can be varied as a function of one or more state variables of the vehicle derived from the crash process.

3. Process for triggering restraining means in the case of a safety system for vehicle occupants, in which process an acceleration signal is measured, a speed is formed by integration with respect to time, and this speed is converted by weighting into an operational signal, and in which process at least one threshold value can be predetermined for the operational signal in order to form a triggering criterion, characterized in that the threshold value used as the triggering criterion can be varied as a function of one or more state variables of the vehicle derived from the crash process.

4. Process for triggering restraining means in the case of a safety system for vehicle occupants, in which process an acceleration signal is measured, the said acceleration signal is weighted by a first weighting function, the weighted acceleration signal is converted by integration with respect to time into a first operational signal, the said first operational signal is converted by a second weighting function into a second operational signal, and in which process at least one threshold value can be predetermined for the operational signal in order to form a triggering criterion, characterized in that the threshold value used as the triggering criterion can be varied as a function of one or more state variables of the vehicle derived from the crash process.

5. Process according to one of Claims 1 to 3, characterized in that the acceleration signal itself or signals derived therefrom (e.g. the vehicle speed) are used as the state variable.

6. Process according to one of Claims 1 to 3, characterized in that the time elapsed in the crash is used as one of the state variables.

7. Process according to one of Claims 1 to 5, characterized in that the times elapsed since the overshooting of threshold values by one or more state variables are used to form a triggering criterion.

8. Process according to one of Claims 1 to 5, characterized in that not only one or more instantaneous state variables of the vehicle, but also temporally prior state variables of the vehicle derived from the crash process are used to form a triggering criterion.

9. Process according to one of Claims 1 to 8, characterized in that the output signals of one or more sensors are used as one or more state variables.

10. Process according to one of Claims 1 to 9, characterized in that in the case of a sensor having a defined switching performance, the threshold value or the weighting functions can be varied as a function of the switching state of this sensor.

11. Process according to one of Claims 1 to 10, characterized in that a first threshold value is predetermined for the acceleration, in that an amplitude value of the acceleration-time curve is detected by means of a sensor, and in that a second threshold value used as the triggering criterion is varied if the amplitude value of the acceleration-time curve overshoots the first threshold value.

12. Process according to one of Claims 1 to 11, characterized in that a first threshold value (as) of the acceleration (a) is predetermined, in that a plurality of amplitude values (ai) of the acceleration-time curve (a = a (t)) are detected at intervals in time, in that the arithmetic mean value (ai) is formed from the plurality of amplitude values (ai) and in that the second threshold value (DV threshold) used as the triggering criterion is varied - independently of the mean value (ai) of the last acceleration values.

13. Process according to one of Claims 1 to 12, characterized in that at least five amplitude values (ai) are detected in order to form the mean value (ai).

14. Process according to one of Claims 1 to 13, characterized in that a first threshold value (as) of the acceleration (a) and a characteristic (f (ai)) assigned to acceleration values (ai) are predetermined, in that at least one amplitude value (ai) of the acceleration-time curve (a = a (t)) is detected, and in that a second threshold value used as the triggering criterion is varied if the value of the characteristic (f (ai)) assigned to the amplitude value (ai) overshoots the first threshold value (as).

15. Process according to one of Claims 1 to 14, characterized in that the second threshold value (DV threshold) used as the triggering criterion is reduced.

16. Process according to one of Claims 1 to 15, characterized in that the DV threshold is raised or lowered in accordance with a time-dependent function.

17. Process according to one of Claims 1 to 16, characterized in that the DV threshold is raised or lowered in accordance with a function dependent upon the integrator state.

18. Process according to one of Claims 1 to 17, characterized in that the DV threshold is raised or lowered both in accordance with a time-dependent function and by a function dependent upon a DV integrator state.

19. Process according to one of Claims 1 to 18, characterized in that besides the usual integrator (reference integrator) an additional integrator (triggering integrator) is provided, which differs from the reference integrator both in accordance with a time-dependent function and in accordance with a function dependent upon the reference indicator state, and in that the comparison between the DV threshold and the value of the triggering integrator is used as the triggering criterion.

20. Process according to one of Claims 1 to 19, characterized in that all the variations of the DV threshold are likewise superimposed over the integrator (reference integrator), and in that the triggering integrator formed by this measure then serves together with the DV threshold as the triggering criterion.

21. Process according to one of Claims 1 to 20, characterized in that the DV threshold is reduced or raised in accordance with a linear function of time.

22. Process according to one of Claims 1 to 21, characterized in that the DV threshold is reduced or raised in accordance with a non-linear, in particular quadratic, function of time.

23. Process according to one of Claims 1 to 22, characterized in that the DV threshold is reduced with the establishment of the reduction criterion, but is raised once again with a time delay after cancellation of the reduction criterion.

24. Process according to one of Claims 1 to 23, characterized in that the time delay is a few milliseconds.

25. Process according to one of Claims 1 to 24, characterized in that the gradient of the acceleration-time curve (a = a(t)) is detected, and in that the DV threshold is varied, in particular lowered, if the detected gradient of the acceleration-time curve over-shoots a predeterminable limiting value.

26. Process according to one of Claims 1 to 25, characterized in that an acceleration signal is detected, and in that before the determination of the speed signal by integration in respect of time of the acceleration signal, the acceleration signal values are modified by an operator.

27. Process according to one of Claims 1 to 26, characterized in that the acceleration signal values are combined with an additive constant.

28. Process according to one of Claims 1 to 27, characterized in that the acceleration signal values are combined with a multiplicative factor.

29. Process according to one of Claims 1 to 28, characterized in that values of a characteristic are assigned to the acceleration signal values.

30. Process according to one of Claims 1 to 29, characterized in that values of a family of characteristics are assigned to the acceleration signal values.

31. Process according to one of Claims 1 to 30, characterized in that a speed signal (DV) is formed by integration with respect to time of the acceleration signal or of a function of the acceleration signal, in that a basic threshold value (DV basic threshold DVG) is established for the speed signal, in that at least one further threshold value (DV1) is established for the speed signal, and in that the DV threshold value is varied, in particular reduced, if the DV integrator (DVI) overshoots the further threshold value (DV1) of the speed signal.

32. Process according to one of Claims 1 to 31, characterized in that at least two threshold values (DV1, DV2), of the speed signal are established, and in that the DV basic threshold value (DVG) is varied, in particular lowered, for as long as the DV integrator (DVI) is located inside the range delimited by the threshold values (DV1, DV2), or a minimum DV threshold value is reached.

33. Process according to one of Claims 1 to 32, characterized in that at least the higher threshold value (DV2) of the threshold values (DV1, DV2) of the speed signal is selected in a time-dependent manner, and varied in a time-dependent manner at least from the instant (T1) at which the DV integrator (DVI) overshoots the threshold value (DV1).

34. Process according to one of Claims 1 to 33, characterized in that the two threshold values (DV1, DV2) can be varied in a time-dependent manner.

35. Process according to one of Claims 1 to 34, characterized in that the threshold values (DV1, DV2) are dependent upon time in accordance with a linear relationship.

36. Process according to one of Claims 1 to 35, characterized in that the threshold values (DV1, DV2) linearly dependent upon tee have different gradients.

37. Process according to one of Claims 1 to 36, characterized in that upon overshooting of a predeterminable lower threshold (DV1) by the reference integrator (RI) at least one timing element is started, which during its running time effects a variation in the DV threshold (DVG).

38. Process according to one of Claims 1 to 37, characterized in that the DV threshold (DVG) is raised.

39. Process according to one of Claims 1 to 38, characterized in that the DV threshold (DVG) is reduced.

40. Process according to one of Claims 1 to 39, characterized in that the extent of the variation in the DV threshold (DVG) is selected as a function of acceleration amplitudes, of acceleration amplitudes of specific polarity, or as a function of the value of an integrator state, in order, in particular, to prevent instances of faulty triggering due to brief acceleration signals of high amplitude (jolting, impact).

41. Process according to one of Claims 1 to 40, characterized in that the at least one timing element is reset once again upon undershooting of the predeterminable lower threshold (DV1).

42. Process according to one of Claims 1 to 41, characterized in that in order to attain a desired triggering response, the DV threshold (DVG) is varied during the running times of the at least one timing element.

43. Process according to one of Claims 1 to 42, characterized in that a counter circuit is used for each timing element.

44. Process according to one of Claims 1 to 43, characterized in that, in order to represent a plurality of timing elements, a counter circuit is used which can be interrogated for specific counter states.

## Revendications

**1.** Procédé de déclenchement de moyens de retenue d'un système de sécurité des occupants d'un véhicule, procédé selon lequel on mesure un signal d'accélération et on transforme par intégration en fonction du temps, ce signal d'accélération en une vitesse et on forme un critère de déclenchement en prédéterminant au moins une valeur de seuil pour la vitesse, procédé caractérisé en ce que la valeur de seuil utilisée comme critère de déclenchement est variable en fonction d'une ou plusieurs grandeurs d'état du véhicule dépendant d'une collision.

**2.** Procédé de déclenchement des moyens de retenue d'un système de sécurité pour les occupants d'un véhicule, selon lesquels on mesure l'accélération, on pondère ce signal d'accélération par une fonction de pondération, on transforme le signal d'accélération pondéré en un signal utile par intégration en fonction du temps et, pour former un critère de déclenchement, on prédétermine au moins une valeur de seuil du signal utile, procédé caractérisé en ce que la valeur de seuil utilisée comme critère de déclenchement est modifiée en fonction d'une ou plusieurs grandeurs d'état du véhicule dépendant d'une collision;

**3.** Procédé de déclenchement des moyens de retenue d'un système de sécurité des occupants d'un véhicule, selon lequel on mesure un signal d'accélération, on forme une vitesse par intégration en fonction du temps, on transforme cette vitesse en un signal utile en procédant par pondération et on prédétermine au moins une valeur de seuil pour le signal de travail, pour former un critère de déclenchement, procédé caractérisé en ce qu'on modifie la valeur de seuil utilisée comme critère de déclenchement, en fonction d'une ou plusieurs grandeurs d'état ou de grandeurs d'état du véhicule dépendant d'une collision.

**4.** Procédé de déclenchement des moyens de retenue d'un système de sécurité pour les occupants d'un véhicule, selon lequel on mesure un signal d'accélération, on pondère ce signal d'accélération par une première fonction de pondération, on transforme ce signal d'accélération pondéré par intégration dans le temps en un premier signal de travail, on transforme ce premier signal de travail en un second signal de travail par une seconde fonction de pondération et, pour former un critère de déclenchement, on prédétermine au moins une valeur de seuil pour le signal utile, procédé caractérisé en ce que la valeur de seuil utilisée comme critère de déclenchement est modifiable en fonction d'une ou plusieurs grandeurs d'état ou de grandeurs d'état du véhicule, dépendant d'une collision.

**5.** Procédé selon l'une des revendications 1 à 3, caractérisé en ce que, comme grandeurs d'état, on utilise directement le signal d'accélération ou des signaux qui en dérivent (par exemple le signal de vitesse du véhicule).

**6.** Procédé selon l'une des revendications 1 à 3, caractérisé en ce que, comme grandeurs d'état, on utilise le temps qui s'écoule au cours du choc.

**7.** Procédé selon l'une des revendications 1 à 5, caractérisé en ce qu'on utilise le temps écoulé depuis le dépassement des valeurs de seuil par une ou plusieurs grandeurs d'état pour former un critère de déclenchement.

**8.** Procédé selon l'une des revendications 1 à 5, caractérisé en ce qu'on utilise non seulement une ou plusieurs grandeurs d'état instantanées du véhicule, mais également des grandeurs d'état du véhicule, en retard par rapport à l'essai de choc, pour former un critère de déclenchement.

**9.** Procédé selon l'une des revendications 1 à 8, caractérisé en ce qu'on utilise une ou plusieurs grandeurs d'état du signal d'un ou plusieurs capteurs.

**10.** Procédé selon l'une des revendications 1 à 9, caractérisé en ce que dans le cas d'un capteur présentant un comportement de commutation, déterminé, on modifie la valeur de seuil et les fonctions de pondération suivant l'état de commutation du capteur.

**11.** Procédé selon l'une des revendications 1 à 10, caractérisé en ce qu'on prédétermine une première valeur de seuil pour l'accélération et, à l'aide d'un capteur, on détecte une valeur d'amplitude de la courbe accélération/temps et on modifie une seconde valeur de seuil utilisée comme critère de déclenchement si la valeur de l'amplitude de la courbe accélération/temps dépasse la première valeur de seuil.

**12.** Procédé selon l'une des revendications 1 à 11, caractérisé en ce qu'on prédétermine une première valeur de seuil (as) de l'accélération (a), et dans un intervalle de temps, on détecte plusieurs valeurs d'amplitude (ai) de la courbe accélération/temps (a = a(t)), et en ce qu'à l'aide de ces valeurs d'amplitude (ai), on forme la valeur moyenne arithmétique (ai) et on modifie la valeur de seuil (seuil DV) utilisée comme critère de déclenchement, en fonction de la valeur moyenne (ai) des dernières valeurs d'accélération.

13. Procédé selon l'une des revendications 1 à 12, caractérisé en ce que pour former la valeur moyenne (ai), on détecte au moins cinq valeurs d'amplitude (ai).

14. Procédé selon l'une des revendications 1 à 13, caractérisé en ce qu'on prédétermine une première valeur de seuil (as) de l'accélération (a) et une courbe caractéristique (f(ai)) associée aux valeurs d'accélération (ai), on détecte au moins une valeur d'amplitude (ai) de la courbe accélération/temps (a = a(t)), et on modifie une seconde valeur de seuil utilisée comme critère de déclenchement lorsque la valeur associée à la valeur d'amplitude (ai) de la courbe caractéristique (f(ai)) dépasse la première valeur de seuil (as).

15. Procédé selon l'une des revendications 1 à 14, caractérisé en ce qu'on diminue la seconde valeur de seuil (DV-seuil) utilisée comme critère de déclenchement.

16. Procédé selon l'une des revendications 1 à 15, caractérisé en ce qu'on augmente ou on abaisse le seuil (DV) selon une fonction dépendant du temps.

17. Procédé selon l'une des revendications 1 à 16, caractérisé en ce qu'on augmente ou on abaisse le seuil (DV) selon une fonction dépendant de l'état d'intégration.

18. Procédé selon l'une des revendications 1 à 17, caractérisé en ce qu'on relève ou on abaisse le seuil (DV) à la fois selon une fonction dépendant du temps et selon une fonction dépendant de l'état d'intégration (DV).

19. Procédé selon l'une des revendications 1 à 18, caractérisé en ce qu'en plus de l'intégrateur usuel (intégrateur de référence), on prévoit un intégrateur supplémentaire (intégrateur de déclenchement) qui se distingue de l'intégrateur de référence à la fois selon une fonction dépendant du temps et selon une fonction dépendant de l'état de l'intégrateur de référence, et en ce qu'on utilise comme critère de déclenchement, la comparaison entre le seuil (DV) et la valeur de l'intégrateur de déclenchement.

20. Procédé selon l'une des revendications 1 à 19, caractérisé en ce qu'on combine toutes les variations du seuil (DV) à l'intégrateur (intégrateur de référence) et en ce que l'intégrateur de déclenchement ainsi formé sert de critère de déclenchement avec le seuil (DV).

21. Procédé selon l'une des revendications 1 à 20, caractérisé en ce qu'on relève ou on abaisse le seuil (DV) selon une fonction linéaire du temps.

22. Procédé selon l'une des revendications 1 à 21, caractérisé en ce qu'on relève ou on abaisse le seuil (DV) selon une fonction non linéaire et en particulier une fonction quadratique du temps.

23. Procédé selon l'une des revendication 1 à 22, caractérisé en ce qu'on abaisse le seuil (DV) par constatation du critère d'abaissement, mais on relève de nouveau ce seuil avec temporisation lors de la disparition du critère d'abaissement.

24. Procédé selon l'une des revendications 1 à 23, caractérisé en ce que la temporisation correspond à quelques millisecondes.

25. Procédé selon l'une des revendications 1 à 24, caractérisé en ce qu'on détecte la pente de la courbe accélération/temps (a = a(t)) et on modifie le seuil (DV), en particulier on l'abaisse si la pente détectée de la courbe accélération/temps dépasse une valeur limite prédéterminée.

26. Procédé selon l'une des revendications 1 à 25, caractérisé en ce qu'on détecte un signal d'accélération et avant de déterminer le signal de vitesse par intégration du signal d'accélération en fonction du temps, on modifie les valeurs du signal d'accélération à l'aide d'un opérateur.

27. Procédé selon l'une des revendications 1 à 26, caractérisé en ce qu'on combine les valeurs du signal d'accélération à une constante d'addition.

28. Procédé selon l'une des revendications 1 à 27, caractérisé en ce qu'on combine les valeurs du signal d'accélération à un coefficient de multiplication.

29. Procédé selon l'une des revendications 1 à 28, caractérisé en ce qu'on associe une courbe caractéristique aux valeurs du signal d'accélération.

30. Procédé selon l'une des revendications 1 à 29, caractérisé en ce qu'on associe aux valeurs du signal d'association un champ de caractéristiques.

31. Procédé selon l'une des revendications 1 à 30, caractérisé en ce que, par intégration dans le temps du signal d'accélération ou d'une fonction du signal d'accélération, on forme un signal de vitesse (DV), et on fixe une valeur de seuil de base (seuil de base DVG) pour un signal de vitesse et on fixe au moins une autre valeur de seuil (DV1) du signal de vitesse, et on modifie la valeur de seuil (DV) notamment on l'abaisse lorsque l'intégrateur (DVI) dépasse vers le haut cette autre valeur de seuil (DV1) du signal de vitesse.

32. Procédé selon l'une des revendications 1 à 31, caractérisé en ce qu'on fixe au moins deux valeurs de seuil (DV1, DV2) du signal de vitesse et on modifie la valeur de seuil de base (DVG) et notamment on l'abaisse, aussi longtemps que l'intégrateur (DVI) est dans la zone délimitée par les valeurs de seuil (DV1, DV2) ou atteint une valeur de seuil (DV) minimale.

33. Procédé selon l'une des revendications 1 à 32, caractérisé en ce qu'on choisit au moins la valeur de seuil la plus élevée (DV2) parmi les valeurs de seuil (DV1, DV2) du signal de vitesse en fonction du temps, et on le modifie en fonction du temps au moins à partir de cet instant (T1) auquel l'intégrateur (DVI) dépasse la valeur de seuil (DV1).

34. Procédé selon l'une des revendications 1 à 33, caractérisé en ce que les deux valeurs de seuil (DV1, DV2) peuvent être modifiées en fonction du temps.

35. Procédé selon l'une des revendications 1 à 34, caractérisé en ce que les valeurs de seuil (DV1, DV2) dépendent du temps selon une relation linéaire.

36. Procédé selon l'une des revendications 1 à 35, caractérisé en ce que les valeurs de seuil (DV1, DV2) qui dépendent du temps selon une relation linéaire ont des pentes différentes.

37. Procédé selon l'une des revendications 1 à 36, caractérisé en ce qu'en cas de dépassement d'un seuil inférieur prédéterminé (DV1) par l'intégrateur de référence (RI), on démarre au moins un organe temporisé qui provoque une modification du seuil (DVG) pendant son temps de fonctionnement.

38. Procédé selon l'une des revendications 1 à 37, caractérisé en ce qu'on relève le seuil (DVG).

39. Procédé selon l'une des revendications 1 à 38, caractérisé en ce qu'on abaisse le seuil (DVG).

40. Procédé selon l'une des revendications 1 à 39, caractérisé en ce qu'on choisit le degré de variation du seuil (DV) (DVG) en fonction des amplitudes de l'accélération, de la polarité définie par les amplitudes de l'accélération ou en fonction de l'état d'un intégrateur pour éviter notamment les déclenchements erronés par des signaux d'accélération de courte durée et d'amplitude élevée (choc, coup).

41. Procédé selon l'une des revendications 1 à 40, caractérisé en ce qu'au moins un organe de temporisation est toujours remis à zéro lors du dépassement vers le bas du seuil inférieur (DV1) prédéterminé.

42. Procédé selon l'une des revendications 1 à 41, caractérisé en ce qu'on modifie le seuil (DV) (DVG) pour obtenir un comportement de déclenchement souhaité pendant le temps de fonctionnement d'au moins un organe temporisé.

43. Procédé selon l'une des revendications 1 à 42, caractérisé en ce qu'on utilise un compteur pour chaque organe temporisé.

44. Procédé selon l'une des revendications 1 à 43, caractérisé en ce que pour représenter plusieurs organes temporisés, on utilise un circuit de compteur qui est interrogé pour des états de comptage déterminés.

FIG.1

FIG.2

FIG.3

FIG.4

FIG.5

FIG.6

FIG.7

FIG.8

FIG.9

FIG.10

FIG.11

DVG

DV

DT

T1    T2  T3    T4          TA

t

FIG.12

DVG

DV

RI

DV2

DV1

T1                          T2

t

FIG.13

FIG.14

EP 0 458 796 B2

FIG.15

FIG.16

27

FIG.17

0.0 ms                                        150 ms

i ──→

FIG.18

0      15 ms                                    150 ms

i ──→

FIG. 19